Europäisches Patentamt

European Patent Office

Office européen des brevets

(19)

(11)     EP 0 793 827 B1

## (12)     EUROPEAN PATENT SPECIFICATION

(45) Date of publication and mention
     of the grant of the patent:
     **06.03.2002 Bulletin 2002/10**

(51) Int Cl.$^7$: **G06F 12/08**

(21) Application number: **95939102.0**

(86) International application number:
     **PCT/US95/14552**

(22) Date of filing: **20.11.1995**

(87) International publication number:
     **WO 96/16371 (30.05.1996 Gazette 1996/25)**

(54) **METHOD AND STRUCTURE FOR UTILIZING A DRAM ARRAY AS SECOND LEVEL CACHE MEMORY**

VERFAHREN UND STRUKTUR ZUR VERWENDUNG EINER DRAM-MATRIX FÜR EINEN ZWEITE-STUFE-CACHESPEICHER

PROCEDE ET STRUCTURE PERMETTANT D'UTILISER UN ENSEMBLE MEMOIRE VIVE DYNAMIQUE (DRAM) COMME ANTEMEMOIRE DE DEUXIEME NIVEAU

(84) Designated Contracting States:
     **DE FR GB**

(30) Priority: **22.11.1994 US 343306**
     **17.05.1995 US 443998**

(43) Date of publication of application:
     **10.09.1997 Bulletin 1997/37**

(73) Proprietor: **MONOLITHIC SYSTEM TECHNOLOGY, INC.**
     **San Jose, CA 95134 (US)**

(72) Inventors:
   • **LEUNG, Wingyu**
     **Cupertino, CA 95014 (US)**
   • **HSU, Fu-Chieh**
     **Saratoga, CA 95070 (US)**

(74) Representative: **Atkinson, Ralph et al**
     **Atkinson Burrington 25-29 President Buildings President Way**
     **Sheffield S4 7UR (GB)**

(56) References cited:
     **US-A- 4 464 715        US-A- 5 164 621**
     **US-A- 5 249 282        US-A- 5 265 102**
     **US-A- 5 293 603        US-A- 5 463 584**
     **US-A- 5 537 479**

   • **INTEGRATED DEVICE TECHNOLOGY, INC., ADVANCE INFORMATION IDT71V432, May 1994, "32Kx32 CacheRAM Pipelined/Flow Through Outputs Burst Counter and Self-Timed Write - For Pentium/PowerPC Processors".**

EP 0 793 827 B1

**Description**

The present invention relates to a computer system having a central processing unit and a first level cache memory integrated with a central processing unit. The present invention also relates to a method of using a DRAM array as a next level cache memory from a bus of a computer system.

High-speed computer systems frequently use fast, small-capacity cache (buffer) memory to transmit signals between a fast processor and a slow (and low cost), large-capacity main memory. Cache memory is typically used to temporarily store data which has a high probability of being selected next by the processor. By storing this high probability data in a fast cache memory, the average speed of data access for the computer system is increased. Thus, cache memory is a cost effective way to boost system performance (as compared to using all high speed, expensive memories). In more advanced computer systems, there are multiple levels (usually two levels) of cache memory. The first level cache memory, typically having a storage of 4 Kbytes to 32 Kbytes, is ultra-fast and is usually integrated on the same chip with the processor. The first level cache is faster because it is integrated with the processor and therefore avoids any delay associated with transmitting signals to and receiving signals from an external chip. The second level cache is usually located on a different chip than the processor, and has a larger capacity, usually from 64 Kbytes to 1024 Kbytes.

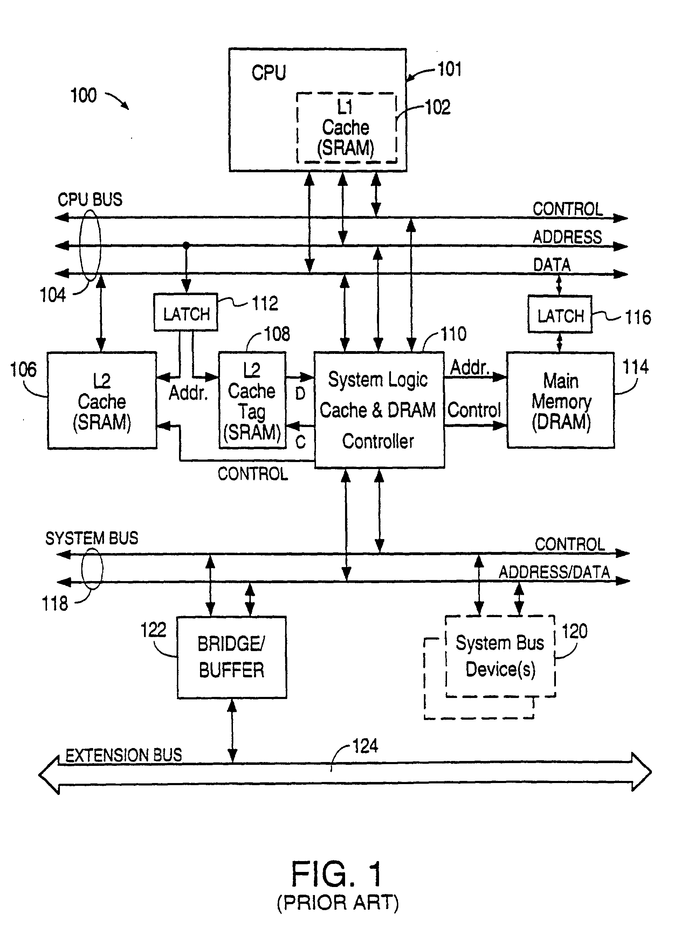

Fig. 1 is a block diagram of a prior art computer system 100 using an SRAM second level cache configuration. The CPU or microprocessor 101 incorporates on-chip SRAM first level cache 102 to support the very fast internal CPU operations (typically from 33 Mhz to 150 Mhz).

First level cache 102 typically has a capacity of 4 Kbytes to 32 Kbytes and performs very high speed data and instruction accesses (typically within 5 to 15 ns). For first-level cache miss or other non-cacheable memory accesses, the memory read and write operations must go off-chip through the much slower external CPU bus 104 (typically from 25 Mhz to 60 Mhz) to the SRAM second level (L2) cache 106 (typically with 128 Kbytes to 1024 Kbytes capacity) with the additional latency (access time) penalty of round-trip off-chip delay.

The need for CPU 101 to manage the delay penalty of off-chip operation dictates that in almost all modern microprocessors, the fastest access cycle (read or write) through the CPU bus 104 is 2-1-1-1. That is, the first external access will consume at least 2 clock cycles, and each subsequent external access will consume a single clock cycle. At higher CPU bus frequencies, the fastest first external access may take 3 or more clock cycles. A burst cycle having 4 accesses is mentioned here for purposes of illustration only. Some processors allow shorter (eg, 2) or longer (eg, 8 or more) burst cycles. Pipelined operation, where the parameters of the first external access of the second burst cycle are latched into CPU bus devices while the first burst cycle is still in progress, may hide the longer access latency for the first external access of the second burst cycle. Thus, the first and second access cycles may be 2-1-1-1, 1-1-1-1, respectively.

The cache tag memory 108 is usually relatively small (from 8 Kbytes to 32 Kbytes) and fast (typically from 10 to 15 ns) and is implemented using SRAM cells. Cache tag memory 108 stores the addresses of the cache lines of second level cache 106 and compares these addresses with an access address on CPU bus 104 to determine if a cache hit has occurred. This small cache tag memory 108 can be integrated with the system logic controller chip 110 for better speed and lower cost. An integrated cache tag memory operates in the same manner as an external cache tag memory. Intel's 82430 PCI set for the Pentium processor is one example of a logic controller chip 110 which utilizes an SRAM integrated cache tag memory.

One reason for the slower operating frequency of CPU bus 104 is the significant loading caused by the devices attached to CPU bus 104. Second level (L2) SRAM cache memory 106 provides loading on the data and address buses (through latch 112) of CPU bus 104. Cache tag memory 108 provides loading on the address bus, system logic controller chip 110 provides loading on the control, data and address buses, and main memory DRAM 114 provides loading on the data bus (through latch 116).

In prior art computer system 100, the system logic chip 110 provides an interface to a system (local) bus 118 having a typical operating frequency of 25 Mhz to 33 Mhz. System bus 118 may be attached to a variety of relatively fast devices 120 (such as graphics, video, communication, or fast disk drive subsystems). System bus 118 can also be connected to a bridge or buffer device 122 for connecting to a general purpose (slower) extension bus 124 (at 4 Mhz to 16 Mhz operating frequency) that may have many peripheral devices (not shown) attached to it.

Traditional high speed cache systems, whether first level or second level, are implemented using static random access memories (SRAMs) because the SRAMs are fast (with access times ranging from 7 to 25 nanoseconds (ns) and cycle times equal to access times). SRAMs are suitable for storing and retrieving data from high-speed microprocessors having bus speeds of 25 to 100 megahertz. Traditional dynamic random access memories (DRAMs), are less expensive than SRAMs on a per bit basis because DRAM has a much smaller cell size. For example, a DRAM cell is typically one quarter of the size of an SRAM cell using comparable lithography rules. DRAMs are generally not considered to be suitable for high speed operation because DRAM accesses inherently require a two-step process having access times ranging from 50 to 120 ns and cycle times ranging from 90 to 200 ns.

Access speed is a relative measurement. That is, while DRAMs are slower than SRAMs, they are much faster than other earlier-era memory devices such as ferrite core and charge-coupled devices (CCD). As a result, DRAM could theoretically be used as a "cache" memory in systems which use these slower memory devices as a "main memory". The operation modes and access methods, however, are different from the operation modes and access methods disclosed herein.

In most computer systems, the second level cache operates in a fixed and rigid mode. That is, any read or write access to the second level cache is of a few constant sizes (line sizes of the first and second level caches) and is usually in a burst sequence of 4 or 8 words (ie, consecutive reads or writes of 4 or 8 words) or in a single access (ie, one word). These types of accesses allow standard SRAMs to be modified to allow these SRAMs to meet the timing requirements of very high speed processor buses. One such example is the burst or synchronous SRAM, which incorporates an internal counter and a memory clock to increment an initial access address. External addresses are not required after the first access, thereby allowing the SRAM to operate faster after the first access is performed. The synchronous SRAM may also have special logic to provide preset address sequences, such as Intel's interleaved address sequence. Such performance enhancement, however, does not reduce the cost of using SRAM cells to store memory bits.

Synchronous DRAMs (SDRAM) have adopted similar burst-mode operation. Video RAMs (VRAM) have adopted the serial port operation of dual-port DRAMs. These new DRAMs are still not suitable for second level cache operation, however, because their initial access time and random access cycle time remain much slower than necessary.

It would therefore be desirable to have a structure and method which enables DRAM memory to be used as a second level cache memory.

Prior art computer systems have also included multiple levels of SRAM cache memory integrated on the same chip as the CPU. For example, DEC's Alpha 21164 processor integrates 16 Kbytes of first level SRAM cache memory and 96 Kbytes of second level SRAM memory on the same chip. In such cases, a third level SRAM cache is typically used between the processor and a DRAM main memory. In such a computer system, it would be desirable to use a DRAM memory to replace the third level SRAM cache memory.

Prior art high-performance second level SRAM cache memory devices generally conform to a set of pin and function specifications to assure that system logic controller 110 may operate compatibly with a variety of different SRAM cache memories from multiple suppliers. Several examples of such pin and function specifications are set forth in the following references: "Pentium™ Processor 3.3V Pipelined BSRAM Specification", Version 1.2, Intel Corporation, October 5, 1994; "32K x 32 CacheRAM™ Pipelined/Flow Through Outputs Burst Counter, & Self-Timed Write -- For Pentium™/PowerPC™ Processors", Advance Information IDT71V432, Integrated Device Technology, Inc., May 1994; and "32K x 32 CacheRAM™ Burst Counter & Self-Timed Write -- For the Pentium™ Processor", Preliminary IDT71420, Integrated Device Technology, Inc., May 1994.

It is therefore desirable to have a method and structure which enables DRAM memory to be used as a second level cache memory which can be interfaced to a conventional logic controller which normally controls a second level SRAM cache memory. It is further desirable to have such a method and structure which requires minimal modification to the conventional logic controller.

United States Patent Number 5,293,603 to MacWilliams et al. discloses an integrated circuit, for use as a cache subsystem, which implements a cache static random access memory (SRAM) storage array, a CPU bus interface and a main memory. The system includes circuits that allow a full cache line to be read or written in a single access of the SRAM array. United States Patent number 5,249,282 to Segers discloses a CPU with a primary cache of SRAM and a secondary cache of DRAM an in which the primary cache has faster access than the secondary cache. United States Patent number 5,265,102 to Saito discloses use of a DRAM to store test patterns in a test pattern memory that uses a FIFO buffer to allow for periodic refresh of the DRAM. Other known art discloses semiconductor delay devices which allow a delay time to be fixed, a method of accessing DRAMs which shortens the access time for memory accesses which occur without collision with refresh cycles, and a semiconductor memory device that includes an array of memory cells and bit and word lines connected to each memory cell.

According to the present invention, a computer system comprises a central processing unit (CPU); a first level cache memory integrated with the CPU; a bus coupled to the CPU wherein data is transferred on the bus in response to a first clock signal having a first clock frequency, wherein data is transferred on the bus at a first data rate; and a next level cache memory coupled to the bus, a control circuit for controlling data transfer between the bus and the next level cache memory; characterised in that the next level cache memory comprises at least one dynamic random access memory (DRAM) array and wherein the control circuit derives a second clock signal from the first clock signal; and causes the data of a burst operation to be transferred from the DRAM array in response to a second clock signal at a second data rate which is faster than the first data rate, wherein the control circuit comprises a read buffer having a data input port coupled to the DRAM array and a data output port coupled to the bus, wherein the data input port is clocked by the second clock signal and the data output port is clocked by the first clock signal, and data is transferred from the DRAM array to the read buffer via the data input port faster than data is transferred in a data burst operation from the read buffer to the bus via the data output port.

In a preferred embodiment the control circuit comprises a burst sequencer which assess the DRAM array in a self-timed manner asynchronous with respect to the first clock signal. Preferably, the burst sequencer includes circuitry to access the DRAM array at both edges of the second clock signal.

Preferably, the control circuit further comprises an address buffer coupled to the bus, wherein the address buffer stores row and column addresses required for a subsequent access to the next level cache memory while a current access to the next level cache memory is in progress.

Preferably, the control circuit further comprises: a phase locked loop (PLL) circuit coupled to the bus, wherein the PLL circuit generates the second clock signal in response to the first clock signal.

In a preferred embodiment, the frequency of the second clock signal is higher than the frequency of the first clock signal. Preferably, the data input port is clocked twice during each cycle of the second clock signal and the data output port is clocked once during each cycle of the first clock signal.

In a preferred embodiment, the control circuit comprises a circuit path for routing the second clock signal, wherein the circuit path is located such that the second clock signal is synchronized with data values written to or read from the DRAM array. Preferably, the burst sequencer further comprises: a sense amplifier circuit coupled to the DRAM array; a data amplifier circuit having a plurality of data amplifiers; and a column selector coupled between the sense amplifier circuit and the data amplifier circuit, wherein the column selector can be selected to isolate the sense amplifier circuit from the data amplifier circuit. Preferably, the number of data amplifiers in the data amplifier circuit is selected to allow the data amplifier circuit to simultaneously store all of the data values required for a burst access of the DRAM array. Preferably, the next level cache memory comprises a plurality of DRAM arrays operating in parallel.

In a preferred embodiment, the next level cache memory further comprises a refresh counter which stores the address of a DRAM array which is currently being refreshed. Preferably, the next level cache memory further comprises a refresh collision comparator which compares the address of the DRAM array currently being refreshed with an address of a DRAM array requested by the CPU. Preferably, the next level cache memory further comprises a CPU access delay circuit coupled to the refresh collision comparator, wherein the CPU access delay circuit transmits a ready handshake signal to the bus when the current refresh operation is completed.

In a preferred embodiment, the input port being a parallel port having a first width which enables the input port to simultaneously transfer a first number of data values, the output port being a parallel port having a second width which enables the output port to simultaneously transfer a second number of data values, the first number being greater than the second number. Preferably, the read data buffer is a multi-depth data buffer capable of storing at least one set of read burst data. Preferably, the input port and the output port are driven by clock signals of the same frequency.

In a preferred embodiment, the next level cache memory further comprises a plurality of terminals coupling the DRAM array to the bus, wherein a first terminal is connected to receive a first signal from the CPU indicating the start of a new transaction and a second terminal is connected to receive a second signal from the CPU which identifies the new transaction as a read transaction or a write transaction. Preferably, the first signal from the CPU is an address strobe input signal compatible with a pipelined burst static random access memory (PBSRAM) protocol.

In a preferred embodiment, the next level cache memory further comprises a plurality of terminals coupling the DRAM array to the bus, wherein a first terminal is connected to receive a first signal from the system controller indicating the start of a new transaction and second and third terminals are connected to receive second and third signals, respectively, from the system controller, wherein the second and third signals identify the new transaction as a read transaction or a write transaction. Preferably, the first signal is an address strobe input signal, the second signal is a byte write enable input signal and the third signal is a global write input signal, wherein the first, second and third signals are compatible with a pipelined burst static random access memory (PBSRAM) protocol.

According to the present invention, in a computer system, a method of using a next level cache memory from a bus coupled to a central processing unit (CPU), the method comprising: transferring data on the bus in response to a first clock signal having a first clock frequency, wherein data is transferred on the bus at a first data rate; and the method being characterised by: providing the next level cache memory as a DRAM array ; generating a second clock signal in response to the first clock signal; operating the DRAM array in response to the second clock signal, wherein data is transferred to and from the DRAM array at a second data rate, the second data rate being greater than the first data rate; reading a plurality of data values from the DRAM array to a read buffer memory using the second clock signal to clock the data values of a burst transaction into the buffer memory; and reading the data values from the read buffer memory to the bus in data burst operations using the first clock signal to clock the data values out of the read buffer memory so that the data values are read to the read buffer memory faster than the data values are read from the read buffer memory.

In a preferred embodiment the second clock signal is of a higher frequency than the first clock signal frequency. Preferably, the method further comprises the step of transmitting data signals on the bus at either the rising edges or the falling edges of the first clock signal; and performing reading operations within the DRAM array at both the rising and falling edges of the second clock signal. Preferably, the frequency of the second clock signal is the same as the frequency of the first clock signal.

In a preferred embodiment, the method further comprises the steps of: transmitting data signals on the bus at either the rising edges or the falling edges of the first clock signal; and performing write operations within the DRAM array at both the rising and falling edges of the second clock signal.

In a preferred embodiment, the second clock signal is the same as the frequency of the first clock signal. Preferably, the method further comprises the steps of: performing a row access operation in the DRAM array in a self-timed manner asynchronous with respect to the second clock signal; performing a column decode operation in the DRAM array in a self-timed manner asynchronous with respect to the second clock signal; and performing a predetermined sequence of column select operations in the DRAM array, wherein the column select operations are synchronous with respect to the second clock signal.

In a preferred embodiment, the step of precharging is completed before the step of reading the data values from the read buffer memory is completed.

The invention will now be described by way of example only, with reference to the accompanying drawings, of which:

Fig. 1 is a block diagram of a prior art computer system having an SRAM second level cache memory;
Fig. 2 is a block diagram of a computer system having a DRAM second level cache memory in accordance with the invention;
Figs. 3(a) and 3(b) illustrate a schematic diagram and a timing diagram, respectively, of a self-timed RAS/CAS/burst accessing sequencer;
Fig. 4 is a schematic diagram of a fast column accessing circuit;
Fig. 5 is a schematic diagram of circuitry which provides for operation of a DRAM second level cache memory at twice the frequency of the CPU bus clock;
Fig. 6 is a timing diagram of a 2-1-1-1 DRAM second level cache read operation;
Fig. 7 is a timing diagram of a 2-1-1-1 DRAM second level cache write operation;
Fig. 8 is a timing diagram of a 2-1-1-1 DRAM second level cache read operation in accordance with an alternate embodiment of the invention;
Fig. 9 is a timing diagram of a 2-1-1-1 DRAM second level cache write operation in accordance with an alternate embodiment of the invention;

Fig. 10 is a timing diagram of a 3-1-1-1 DRAM second level cache read operation in accordance with an embodiment of the invention;
Fig. 11 is a timing diagram of a 3-1-1-1 DRAM second level cache write operation in accordance with an embodiment of the invention;
Fig. 12 is a schematic diagram of a refresh management controller;
Fig. 13 is a schematic diagram illustrating a DRAM second level cache in a typically system environment with key signal pins, in accordance with an embodiment of the invention;
Figs. 14a and 14b are timing diagrams of transaction-based DRAM second level cache read and write operations in accordance with an embodiment of the invention; and
Fig. 15 is a timing diagram of a handshake protocol of a cache ready signal for a DRAM second level cache.

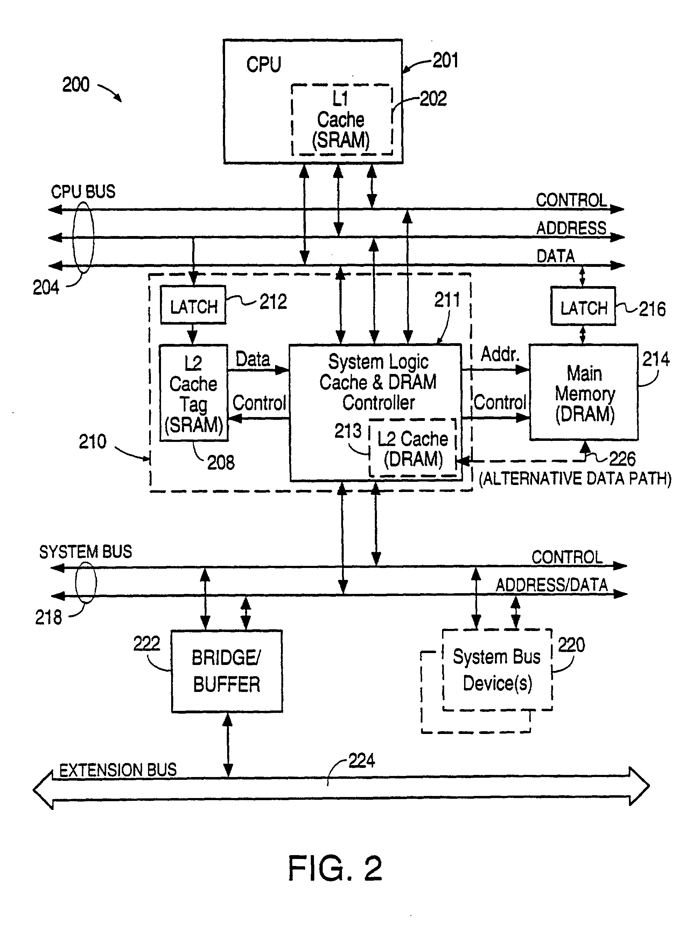

A block diagram of a computer system 200 is shown in Fig. 2, which includes second level DRAM cache memory 213 in accordance with the invention. In addition to second level DRAM cache memory 213, computer system 200 includes CPU 201, first level SRAM cache 202, CPU bus 204, latches 212 and 216, second level SRAM cache tag memory 208, system logic controller 211, main DRAM memory 214, system bus 218, bridge buffer circuit 222, system bus devices 220 and extension bus 224.

Although DRAM cache memory 213 is referred to as a "second level" cache memory, it is understood that the present invention can also be applicable to other "levels" of cache memory higher than the second level (eg. Third level or fourth level). In general, the present invention is applicable to the "next level" cache memory, where the "next level" cache memory is defined as the cache memory which is connected between the processor and a larger-capacity main memory (where the main memory is typically DRAM). Using this definition, the term "second level cache memory" is interchangeable with the term "next level cache memory" in the following. CPU 201, which is typically fabricated on the same integrated circuit chip as first level SRAM cache memory 202, is coupled to the control, address and data lines of the CPU bus 204. Second level SRAM cache tag memory 208 receives address signals from the address lines of CPU bus 204 through latch 212. System logic controller 211 (which controls second level DRAM cache memory 213 and main memory 214) is coupled to the control, address and data lines of CPU bus 204. In one embodiment, main DRAM memory 214 receives data signals from the data lines of CPU bus 204 through latch 216. In another embodiment, main DRAM memory 214 receives data signals from system logic controller 211 through alternate data path 226. System logic controller 211 interacts with cache tag memory 208 and main memory 214 in a conventional manner. In one embodiment, SRAM cache tag memory 208, latch 212, system logic controller 211 and second level cache memory 213 are fabricated on the same integrated circuit chip 210. In another embodiment, second level DRAM cache memory 213 and system logic controller 211 are fabricated on separate chips. In yet another embodiment, second level DRAM cache memory 213 and system logic controller 211 are fabricated on the same chip as CPU 201 and first level SRAM cache memory 202.

Because the data paths from CPU bus 204, SRAM cache tag memory 208, system bus 218 and main memory 214 feed into system logic controller 211, the system logic controller 211 can manage most of the data traffic locally without tying up CPU bus 204. For example, system logic controller 211 controls data traffic between main memory 214 and second level DRAM cache memory 213 or between system bus 218 and main memory 214. Consequently, the loading of CPU bus 204 is lighter and the physical layout of CPU bus 204 is more compact, thereby allowing for faster operations on CPU bus 204.

Embodiments of the present invention overcome many obstacles to successfully use second level DRAM cache memory 213 as a second level cache memory which matches the performance of an SRAM-cell based second level cache. These obstacles include: (1) slow access latency, (2) precharge time, (3) refresh arbitration and control. These obstacles are overcome as described below.

## (1) Slow Access Latency

The access time of a DRAM cell array consists of a row access (RAS) time (i.e., the time to decode a row address, select a row word-line, and load a row of data bits from the DRAM cell array into sense amplifiers in the column area) and a column access (CAS) latency (i.e., the time to decode a column address, select a column, read the data from the sense amplifiers into data amplifiers, and then propagate the data signal to the chip input/output area). The sum of the row and column access latencies is relatively long (45 to 60 ns) compared to SRAM access latency (7 to 25 ns). The DRAM access is longer because of the two-step sequential access, as well as the relatively long column decoding and access time (17 to 25 ns).

Some prior art DRAM devices such as pseudo-SRAMs and BiCMOS fast DRAM (e.g., Hitachi's 35 ns 1Mb BiCMOS DRAM with demultiplexed addressing), use an SRAM-like interface in which the full row and column addresses are provided to the chip at one time and internal two-step access is performed in a fully asynchronous fashion. However, these pseudo-SRAM devices combine the RAS and CAS data operations, precharge time and the array refresh operation into each access cycle to emulate standard asynchronous SRAM operations. As a result, these pseudo-SRAM devices are very slow and not suitable for cache memory applications.

The BiCMOS fast DRAM has a fast initial access time because demultiplexed addresses allow row and column addresses to be loaded at the beginning of each access cycle using separate address pins. However, the BiCMOS fast DRAM still operates with the constraints of traditional asynchronous DRAM (i.e., long access cycle times and relatively slow subsequent accesses).

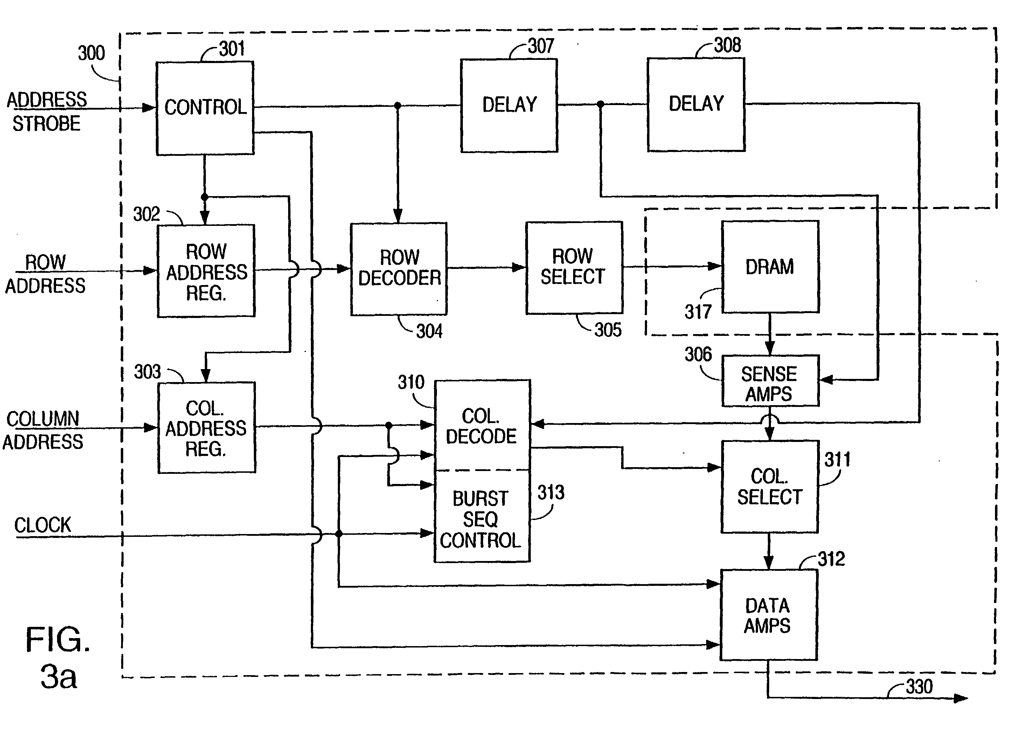

In one embodiment of the invention, accesses to second level DRAM cache memory 213 are made faster by including a self-timed RAS/CAS/burst sequencer within second level DRAM cache memory 213. The burst sequencer merges asynchronous and synchronous operations of the DRAM accesses in a seamless fashion as described below. Fig. 3a is a block diagram of a self-timed RAS/CAS burst sequencer 300 in accordance with the invention. Burst sequencer 300 represents a portion of the accessing circuit included within second level DRAM cache memory 213. Burst sequencer 300 includes control circuit 301, row address register 302, column address register 303, row decoder 304, row selector 305, sense amplifier control circuit 306, delay circuits 307-308, sense amplifier circuit 306, column decoder 310, column selector 311, data amplifier circuit 321 and burst sequence controller 313. Burst sequencer 300 is used to access an array of DRAM memory cells 317.

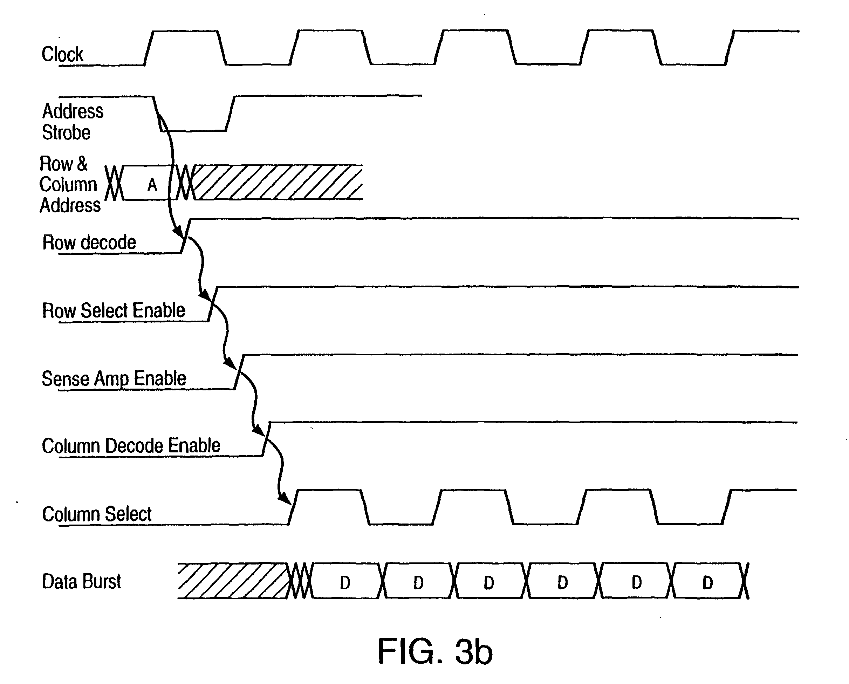

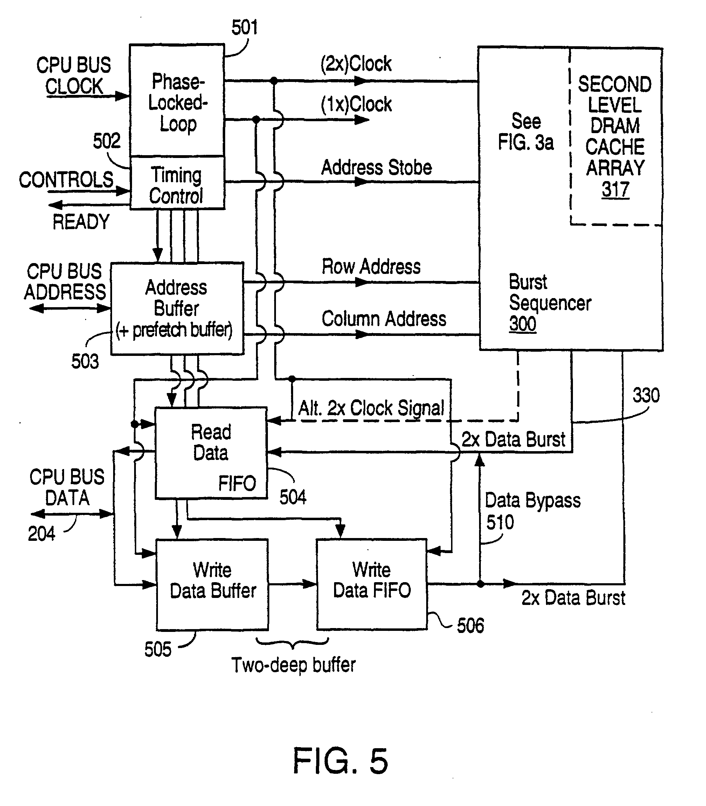

Fig. 3b is a waveform diagram illustrating the operation of burst sequencer 300. To access second level DRAM cache memory 213, CPU 201 transmits a control signal through CPU bus 204 to second level DRAM cache 213. Second level DRAM cache 213 converts this control signal to an address strobe signal (See, e.g., timing control circuit 502, Fig. 5) which is provided to control circuit 301. CPU 201 also transmits an address through CPU bus 204 to second level DRAM cache memory 213. Second level DRAM cache 213 converts this control signal to row and column addresses (See, e.g., address buffer 503, Fig. 5) which are provided to row address register 302 and column address register 303, respectively. In response to the address strobe signal, control circuit 301 generates a signal which causes the full row and column addresses (and bank address, not shown here, to simplify the schematic diagram) to be latched into registers 302 and 303, respectively. It is not necessary to simultaneously latch in the row and column addresses because the column address is not needed until the RAS operation is completed. As long as the column address is latched into register 303 before the completion of the RAS operation, there is no speed penalty.

The row address stored in row address register 302 and a row decode signal (Fig. 3b) generated by control circuit 301 are transmitted to row decoder 304. In response, row decoder 304 decodes the row address and transmits this decoded address to row selector 305. Row selector 305, turns on the appropriate word line (Fig. 3b) (i.e., performs a row selection operation) within DRAM array 317.

A sense amplifier enable signal (Fig. 3b) is then generated by delay circuit 307 and transmitted to sense amplifier circuit 306. In response, the sense amplifiers in sense amplifier circuit 306 turn on to receive the data values of the selected row within DRAM array 317. The asynchronous delay introduced by delay circuit 307 is selected in view of the delays inherent in row decoder 304, row selector 305 and DRAM array 317, such that sense amplifier circuit 306 is enabled as soon as the data values from the selected row of DRAM array 317 are available (i.e., as soon as the row access operation is completed). Delay circuit 307 can be realized in a number of different ways, such as an inverter chain or an RC circuit.

At the same time the row access operation is being performed, the column address can be provided from column address register 303 to column decoder 310, and column decoder 310 can perform the column decode operation. At the same time, burst sequence controller 313 can be set up to supply a special address scrambling sequence based on the initial column address received from column address register 303. For example, Intel's 486 and Pentium microprocessors modula-4 sequences are 0-1-2-3, 1-0-3-2, 2-3-0-1 & 3-2-1-0.

After sense amplifier circuit 306 is turned on and the column decode operation has been performed, the column decoder 310 receives a column decode enable signal from delay circuit 308. This column decode enable signal causes column decoder 310 to provide the decoded column address to the column selector 311. After the initial decoded column address is provided to column selector 311, burst sequence controller 313 causes column decoder 310 to sequentially change the decoded column address provided to the column selector 311 once during each half clock cycle. As a result, sequential data (with appropriate burst sequence scrambling determined by burst sequence controller 313) are read into data amplifiers 312 synchronous to the clock signal. In one embodiment, the clock signal is the CPU bus clock signal (i.e., a buffered copy of the clock signal provided by CPU bus 204).

The clock signal is also provided to data amplifier circuit 312. Data is read from data amplifier circuit 312 to data line 330 at both the rising and falling edges of the clock signal (i.e., dual edge transfer). In this specification, when an operation is said to occur "at a clock edge", it is understood that the operation occurs immediately after the occurrence of the clock edge.

A burst mode write operation is very similar to the read operation, except that data is coming from the chip input/output circuitry and is synchronously loaded into data amplifiers 312 and through column selector 311 into the appropriate sense amplifiers 306 with appropriate burst address sequence. The asynchronous self-timed RAS and CAS operations allow very tight access timing independent of clock frequency (that is, the RAS and CAS access time is constant and not a function of the clock frequency) while at the same time employing fully synchronous operation for the burst read/write operation that scales with clock frequency.

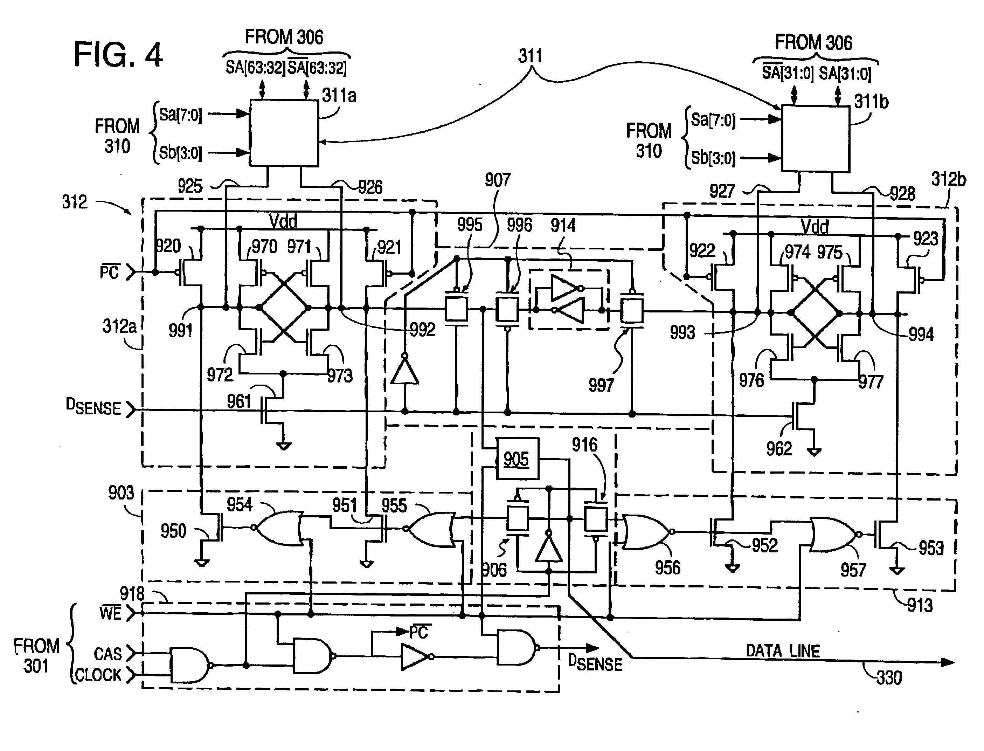

Fig. 4 is a schematic diagram of a portion of column selector 311 and data amplifier circuit 312 of Fig. 3a. The following discussion describes the manner in which the circuitry of Fig. 4 provides for dual-edge data transfer.

Column selector 311 includes tree decoders 311a and 311b. Tree decoders 311a and 311b are coupled to sense amplifier circuit 306 through a predetermined number (e.g., 32) of complementary signal lines. Tree decoders 311a and 311b are also coupled to column decoder 310. In the embodiment illustrated, column decoder 310 provides control signals Sa[7:0] and Sb[3:0], which cause tree decoders 311a and 311b to selectively couple one of the sense amplifiers in sense amplifier circuit 306 to data amplifier circuit 312.

Data amplifier circuit 312 includes data amplifiers 312a and 312b, multiplexer 907, read data latch 914, write buffers 903 and 913, tri-state buffer 905 and clock generation circuit 918. The circuitry illustrated in Fig. 4 services 64 of the sense amplifiers in sense amplifier circuit 306. The circuitry of Fig. 4 is repeated for each additional 64 sense amplifiers in sense amplifier circuit 306. In one embodiment, the total number of data amplifiers in data amplifier circuit 312 is equal to the number of bits in each data word read from or written to DRAM array 317.

The complementary outputs of tree decoders 311a and 311b are provided to data amplifiers 312a and 312b, respectively. Data amplifiers 312a and 312b are regenerative latches which include cross-coupled transistors 970-973 and transistors 974-977. These regenerative latches are controlled by a locally generated, single phase clock signal $D_{sense}$.

A local self-timed clock circuit 918 generates the control signals used to control data amplifiers 312a and 312b and multiplexer 907. A column precharge signal, $\overline{PC}$, and the $D_{sense}$ signal are generated in response to the clock signal, a column-access (CAS) signal and a bus precharge signal, $\overline{WE}$ (for write operation). The CAS and $\overline{WE}$ signals are generated by control circuit 301. The clock signal is the same clock signal illustrated and described in connection with Figs. 3a and 3b. The $\overline{PC}$ and $D_{sense}$ signals are local signals which are not used to drive any circuitry outside data amplifier pair 312a and 312b. Thus, timing skew in the control signals is minimized.

<u>Read operation</u>

To perform a read operation, the $\overline{WE}$ signal is de-asserted high. As a result, transistors 950-953 of write buffers 903 and 913 are turned off and tri-state buffer 905 is placed in a low impedance state. The CAS signal is asserted high. During a first half cycle of the clock signal, the clock signal is in a logic high state, thereby forcing both the $D_{sense}$ and $\overline{PC}$ signals to a logic high state. Under these conditions, the complementary outputs of tree decoders 311a and 311b are latched in data amplifiers 312a and 312b, respectively.

For example, a logic low signal on lead 925 and a logic high signal on lead 926 cause transistors 971 and 972 to turn on and transistors 970 and 973 to turn off. The high $D_{sense}$ signal causes transistor 961 to turn on. As a result, node 991 is pulled down to ground through transistors 972 and 961 and node 992 is pulled up to Vdd through transistor 971. In a similar manner, a logic low signal on lead 926 and logic high signal on lead 925 results in node 992 being pulled to ground through transistors 973 and 961 and node 991 being pulled to Vdd through transistor 970.

Data amplifier 312b operates in the same manner as data amplifier 312a to latch the signals present on leads 927 and 928. Thus, a logic high signal on lead 927 and logic low signal on lead 928 results in node 993 being pulled up to Vdd through transistor 974 and node 994 being pulled down to ground through transistors 977 and 962. Similarly, a logic low signal on lead 927 and logic high signal on lead 928 results in node 993 being pulled to ground through transistor 976 and 962 and node 994 being pulled to Vdd through transistor 975.

Within multiplexer 907, the high $D_{sense}$ signal causes transmission gates 995 and 997 to close (i.e., be placed in a conducting state) and transmission gate 996 to open (i.e., be placed in a non-conducting state). As a result, the voltage on node 992 is transmitted through transmission gate 995 and tri-state buffer 905 to data line 330. Data line 330 connects tri-state buffer 905 directly to the bus transceivers in the input/output circuit. This connection results in little loading other than the routing capacitance because there is no other signal multiplexed on this line. Loading of data line 330 is thus substantially smaller than that present in prior art schemes. Consequently, the data lines of the present invention are capable of operating at much higher frequency (up to 250 Mhz).

In addition, the voltage on node 933 is transmitted through transmission gate 997 and is stored in read data latch 914.

During the second half cycle of the clock signal, the clock signal transitions low, thereby forcing both the $D_{sense}$ and $\overline{PC}$ signals low. In response to the low $\overline{PC}$ signal, transistors 920-923 are turned on. As a result, leads 925-928 are coupled to Vdd (i.e., leads 925-928 are precharged). In addition, the low $D_{sense}$ signal opens transmission gates 995 and 997 and closes transmission gate 996. As a result, the voltage stored in read data latch 914 is read out through transmission gate 996 and tri-state buffer 905 to data line 330 during the second half cycle. In the foregoing manner, dual-edge transfer of data from sense amplifier circuit 306 to data line 330 is facilitated.

Write operation

To perform a write operation, the $\overline{WE}$ signal is asserted low, thereby placing tri-state buffer 905 in a high-impedance state and applying a logic low signal to an input of each of NOR gates 954-957 in write buffers 903 and 913. During a first half cycle of the clock signal, the clock signal is in a logic low state, thereby closing transmission gate 906 and opening transmission gate 916. The signal on the data line 330 is therefore routed to an input of NOR gate 955. For example, a high signal on the data line 330 causes NOR gate 955 to provide a logic low signal to transistor 951, thereby turning off this transistor. The low output of NOR gate 954 is also provided to an input of NOR gate 954, causing NOR gate 954 to output a logic high signal which turns on transistor 950.

The low $\overline{WE}$ signal also causes the $D_{sense}$ and $\overline{PC}$ signals to go high, thereby turning off p-channel transistors 961-962. As a result, p-channel transistor 971 and n-channel transistor 972 are turned on. Consequently, tree decoder 311a receives supply voltage Vdd on lead 926 and the ground supply voltage on lead 925, thereby writing a high data value to the selected column of sense amplifier.

If the input from data line 330 is a logic low signal (as opposed to a logic high signal as previously discussed), tree decoder 311a receives ground supply voltage on lead 926 and supply voltage Vdd on lead 925 in a manner similar to that previously described. In this manner, data is written from data line 330 to the sense amplifiers during each half cycle of the clock signal. The demultiplexing performed by transmission gates 906 and 916 is necessary because the address selected by tree decoders 311a and 311b changes only once every clock cycle.

Tree decoders 311a and 311b limit the multiplexing loading to approximately 12 lines (8+4) (as opposed to 512 lines in a typical conventional scheme). The decreased capacitive loading together with the higher drive signal provided by data amplifier circuit increase the data bandwidth.

Delay matching

Delay matching in the column circuitry is minimized by routing the lines carrying the clock signal, the pre-decoded column select signals Sa[7:0] and Sb[3:0], and the data signals in the same manner through the column area of the memory array.

Alternate Embodiment

Fig. 5 illustrates an alternate embodiment, in which the frequency of the clock signal is doubled and the clock generation circuit 918 (Fig. 4) is modified such that data values are read from (or written to) data amplifier circuit 312 at each rising (or falling) edge of the clock signal. Thus, data values are transferred on data line 330 at the same rate as the previously described embodiment (i.e., at a frequency equal to twice the CPU bus clock frequency). The clock generation circuit 918 can be modified by transmitting the doubled clock signal through a 1-bit counter (not shown) before the clock signal is applied to clock generation circuit 918. Other modifications to clock generation circuit 918 to allow the circuitry of Fig. 4 to operate in a single edge transfer mode with respect to the doubled clock signal would be apparent to one of ordinary skill.

Phase-locked loop (PLL) circuit 501 buffers the CPU bus clock signal (from CPU bus 204, Fig. 2) and generates a clock signal having the same frequency as the CPU bus clock signal (hereinafter referred to as a 1X clock signal) and a clock signal having twice the frequency of the CPU bus clock signal (hereinafter referred to as a 2X clock signal). The 1X and 2X clock signals have fixed phase relationships with respect to the incoming CPU bus clock signal. These phase relationships are selected to provide data set-up and hold times appropriate for proper data transfer.

Address buffer 503 latches the CPU bus address and decodes it into row and column addresses (and a bank address if there are multiple DRAM arrays, not shown here for purposes of simplicity). Timing control circuit 502 derives an internal address strobe signal from the CPU bus address (received from address buffer 503) and a control signal received from CPU bus 204. The address strobe, row address, column address and 2X clock signals are provided to burst sequencer 300 and DRAM array 317. Burst sequencer 300 and DRAM array 317 operate substantially as previously described in response to these signals (See, Fig. 3a).

Address buffer 503 may have additional latches (pre-fetch buffers) to store the address of the next access operation while the current access is still in progress. The pre-fetch buffers enable pipelined operation so that back to back operations may be partially overlapped to reduce the latency cycles between operations.

The remainder of the circuitry illustrated in Fig. 5 is directed toward solving the problems introduced by the precharge time required for the DRAM array. Accordingly, this circuitry is discussed below.

### (2) Precharge Time

The operation of a DRAM cell array requires that after a normal read or write access (RAS + CAS access), the selected row be de-selected and the sense-amplifiers be turned off and equalized before any subsequent RAS operations are initiated. This operation is referred to as a precharge operation. The time period required to perform the precharge operation is referred to as the precharge (PRE) time. The PRE time is sufficiently long to fully equalize the sense amplifiers and the relatively high capacitance bitlines, so that the very small signal provided by the cell capacitor to the sense amplifier in connection with the next RAS operation can be read correctly and reliably. The PRE time requirement prevents DRAMs from executing back to back accesses which SRAMs can easily support. Thus, the access cycle time of DRAM is much longer (typically 1.5X to 2X) than its access latency, while SRAM's access cycle time is approximately equal to its access latency.

To be able to use DRAM with SRAM performance, the PRE time must be substantially "hidden" from the access operations of the CPU bus. Read data buffer 504, write data buffer 505 and write data buffer 506, illustrated in Fig. 5, operate to allow the PRE time to be hidden from the access operations.

As described in more detail below, the 2X clock signal is used to clock DRAM array 317, the data input terminal of read data buffer 504, and the data output terminal of write data buffer 506. The 1X clock signal is used to clock the data output terminal of read data buffer 504 and the data input terminal of write data buffer 505.

Data values are read from DRAM array 317 to CPU bus 204 through read data buffer 504. Data values are read into read data buffer 504 at the frequency of the 2X clock signal. Data is then read out of read data buffer 504 at the frequency of the CPU bus clock signal. In this manner, read data buffer 504 performs clock resynchronization.

Conversely, data values are written to DRAM array 317 from CPU bus 204 through write data buffer 505 and write data buffer 506. Data values are read into write data buffer 505 at the frequency of the CPU clock signal and read out of write data buffer 506 at the frequency of the 2X clock signal.

To minimize clock-to-data skew, DRAM array 317 can alternatively provide a 2X clock signal to read data buffer 504 along with the data in a source-synchronous fashion. The alternative 2X clock signal is a return clock signal which travels along a path which is selected such that the 2X clock signal exiting DRAM array 317 has a preselected delay and phase relationship with respect to the data values exiting DRAM array 317.

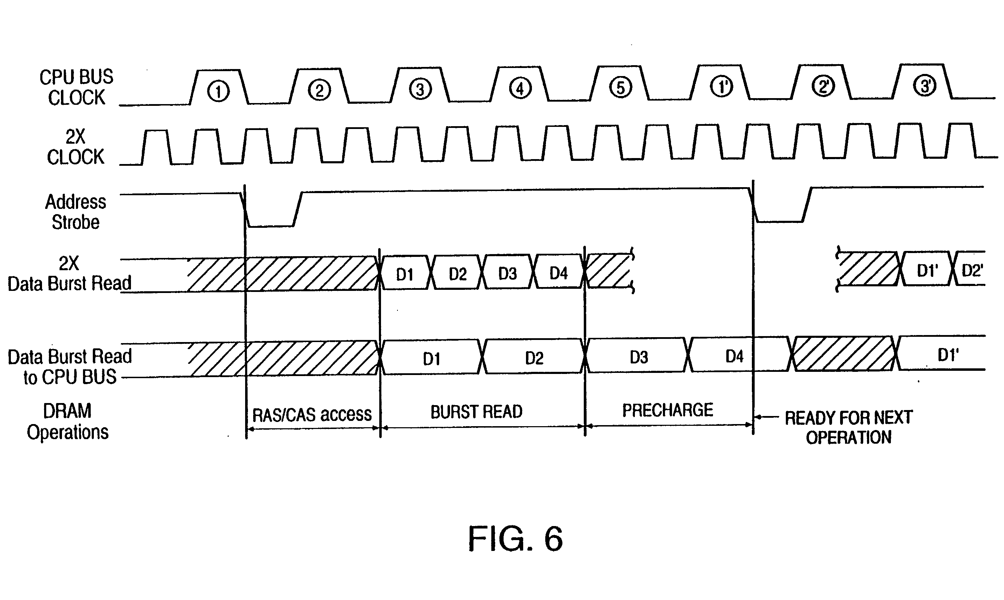

Fig. 6 is a timing diagram for a 2-1-1-1 data read burst operation performed by the circuitry of Fig. 5. After the address strobe signal is asserted low, the RAS and CAS operations are initiated in a self-timed, asynchronous fashion (See, Figs. 3a and 3b). Two rising clock edges after the address strobe signal is asserted, the RAS and CAS operations are completed and a burst read operation is performed by DRAM array 317 in a fully synchronous fashion with respect to the 2X clock signal. The read burst data from DRAM array 317 is clocked into read data buffer 504 by the 2X clock signal. The read burst data is clocked out of read data buffer 504 to the CPU bus by the 1X clock signal. As soon as the read data burst is completed, a precharge operation is initiated to DRAM array 317, thereby preparing DRAM array 317 for the next operation. This next operation can be either a normal back-to-back access or a pipelined access. Because the read data burst is written to read data buffer 504 by the 2X clock signal, there is time left to perform the precharge operation before the data is read out of read data buffer 504 by the 1X clock signal. Thus, the precharge time is hidden from CPU bus 204. If the precharge time is short enough, DRAM array 317 may be ready for a subsequent operation at a time which would allow for pipelined operation.

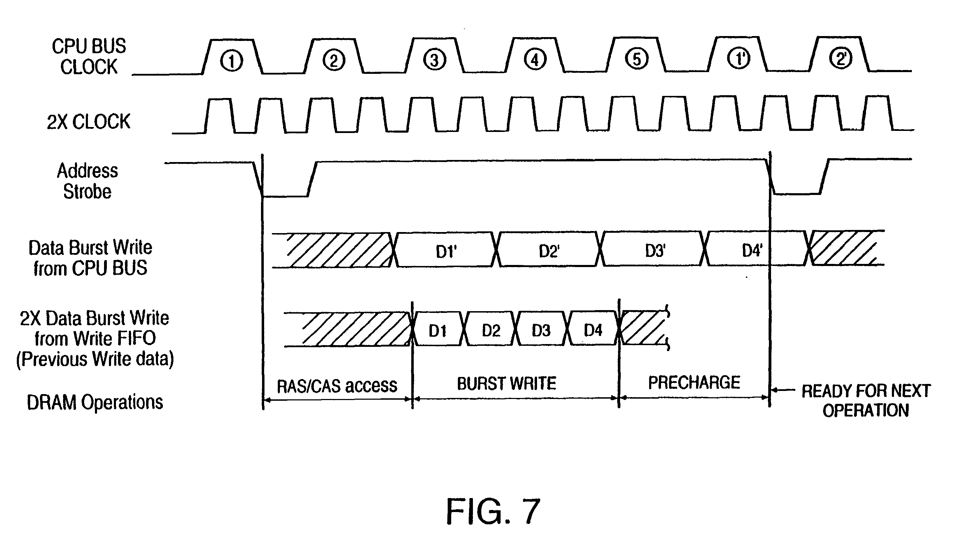

Fig. 7 is a waveform diagram illustrating the timing diagram for a 2-1-1-1 data write burst operation. Because the data lines of the CPU bus 204 receive write burst data at a rate equal to the frequency of the CPU bus clock signal (i.e., the frequency of the 1X clock signal,) a full write burst is not completed until the end of the 5th clock cycle. Thus, no time remains in a 2-1-1-1 data write burst operation to perform a precharge operation.

Therefore, a separate write data buffer 505 (Fig. 5) is used to latch in a first group of write burst data values (e.g., D1-D4) from CPU bus 204. When a second group of write burst data values (e.g., D1'-D4') arrives from CPU bus 204 (there may be multiple intervening read bursts), the first group of write burst data values D1-D4 is forwarded to DRAM array 317 through write data buffer 506. The second group of write burst data values D1'-D4' is then stored in write data buffer 505. The address strobe signal initiates the RAS and CAS operations in a self-timed, asynchronous fashion (See, e.g., Figs. 3a and 3b). The first group of write burst data values D1-D4 is clocked from write data buffer 506 by the 2X clock signal in a fully synchronous fashion. A precharge operation is initiated after the data values D1-D4 are written to DRAM array 317. Because the write data burst is written to DRAM array 317 by the 2X clock signal, there is time left to perform the precharge operation before data values D1'-D4' are written to write data buffer 505 by the 1X clock signal. Thus, the precharge time is hidden from CPU bus 204. Again, if the precharge time is short enough, DRAM array 317 may be ready for a subsequent operation at a time which would allow for pipelined operation.

Fig. 5 also illustrates a data bypass path 510 from write data buffer 506 to read data buffer 504. Data bypass path 510 allows for the special case where a CPU bus 204 requires access to a group of write burst data stored in write data buffer 505 or write data buffer 506, but not yet sent to DRAM array 317. In this case, the write burst data is transmitted from write data buffer 506 to read data buffer 504 at the same time that the write burst data is sent from write data buffer 506 to DRAM array 317.

In alternate embodiments, additional write data buffers can be connected between write data buffer 505 and CPU bus 204 to add depth to the multi-depth write data buffer created by write data buffer 505 and write data buffer 506.

Older microprocessors (i.e., CPU's) may not support the write data burst access to second level DRAM cache memory 213. In these microprocessors, single write accesses are individually transmitted. However, write data buffer 505 and write data buffer 506 can still operate as previously described to "hide" the precharge time of DRAM array 317.

In another embodiment, read data buffer 504, write data buffer 505 and write data buffer 506 can be used in conjunction with the circuitry illustrated in Figs. 3a and 4. As previously discussed, this circuitry causes data to be transferred on data line 330 at both the rising and falling edges of the 1X clock signal (i.e., dual-edge transfer). When performing dual-edge transfer with the 1X clock signal, PLL 501 is not necessary because the two edges of the incoming CPU bus clock signal provide the necessary timing references used for data transfer. In such an embodiment, the input port of read data buffer 504 and the output port of write data buffer 506 are modified such that they are clocked by both the rising and falling edges of the 1X clock signal.

In yet other embodiments, the burst methods previously described can be performed at other clock frequencies (e.g., 4X clock frequency), depending on the timing requirements of DRAM array 317.

The precharge time of DRAM array 317 (Fig. 2) can alternatively be hidden using tree decoders 311a and 311b (Fig. 4) of column selector 311 (Fig. 3a) as isolation switches between sense amplifier circuit 306 and data amplifier circuit 312. To electrically isolate data amplifier circuit 312 from sense amplifier circuit 306, a disconnect control signal is provided to column decoder 310. In response, column decoder 310 disables all control signals Sa[7:0] and Sb[3:0] such that all of the switches in tree decoders 311a and 311b (Fig. 4) are opened, thereby isolating data amplifiers 312a and 312b from sense amplifiers SA[63:0] and $\overline{SA}$[63:0]. The switches of column selector 311 are opened as soon as the data amplifiers in data amplifier circuit 312 have settled. The precharge operation can be initiated as soon as data amplifier circuit 312 and sense amplifier circuit 306 are isolated.

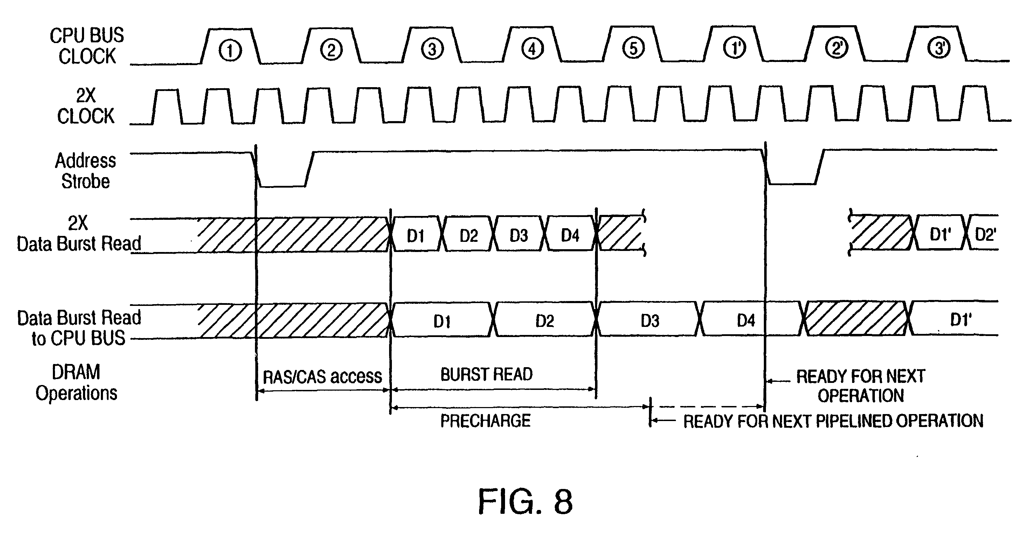

Fig. 8 illustrates the timing of a read burst operation in accordance with this embodiment of the invention. Isolation occurs after the RAS/CAS access operations are performed. Thus, the burst read and precharge operations can be performed simultaneously. Although Fig. 8 indicates that the burst read operation is performed at the frequency of the 2X clock signal, the burst read operation can also be performed at the frequency of the 1X clock signal because the burst read operation can be performed at the same time as the precharge operation. Performing the burst read operation at the frequency of the 1X clock signal advantageously reduces read errors and power consumption.

Once the data amplifier circuit 312 is disconnected from the sense amplifier circuit 306, data values can only be accessed from data amplifier circuit 312. Consequently, to support a burst access, the number of data amplifiers in data amplifier circuit 312 must be sufficient to store all of the data values required during the burst access. Thus, to support a burst access of 4 words, there must be enough data amplifiers in data amplifier circuit 312 to simultaneously store all of the bits which make up the 4 words. In such an embodiment, multiple sense amplifier data values are read into multiple data amplifiers simultaneously by using multiple data amplifiers. This is in contrast to the previously described embodiments in which data amplifier circuit 312 only needs to have a data amplifier for each of the bits in a single word.

In a variation of the embodiment which uses column selector 310 as an isolation switch, multiple DRAM arrays can be simultaneously accessed to provide a burst access. Thus, four DRAM arrays can be used to provide a burst access of 4 words. To accomplish this, a data word is simultaneously stored in the data amplifier circuit of each of the four DRAM arrays. The data amplifier circuits of these DRAM arrays are then disconnected from their associated sense amplifier circuits. The four words can then be read from the data amplifier circuits of the DRAM arrays in the desired order while the DRAM arrays are simultaneously being precharged.

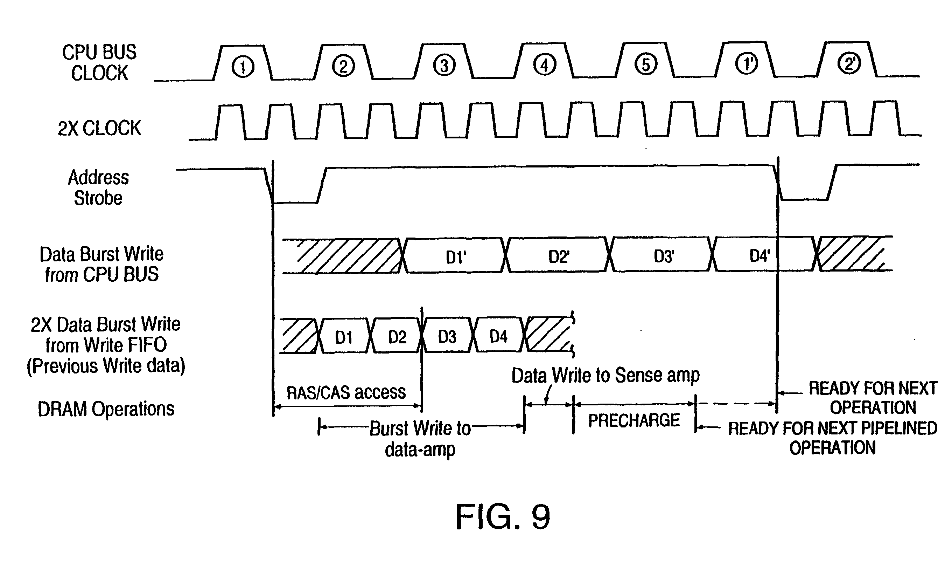

Fig. 9 illustrates the timing of a write burst operation in accordance with this embodiment of the invention. Write data buffer 505 stores a first group of write burst data values D1-D4. Upon receiving a second group of write burst data values D1'-D4', data amplifier circuit 312 is isolated from the sense amplifier circuit 306 and the first group of write burst data values D1-D4 is transmitted through write data buffer 506 to data amplifier circuit 312 at the frequency of the 2X clock signal. At the same time, the RAS/CAS access operations are performed. After the RAS/CAS access operations are complete, data amplifier circuit 312 is connected to sense amplifier circuit 306, thereby providing the first group of write burst data values D1-D4 to sense amplifier circuit 306. The precharge operation is then initiated. Because the write data is burst at the frequency of the 2X clock signal, more time is provided to perform the precharge operation. As a result, the precharge operation can be performed before a subsequent write burst operation is to be performed with the second group of write burst data values D1'-D4'.

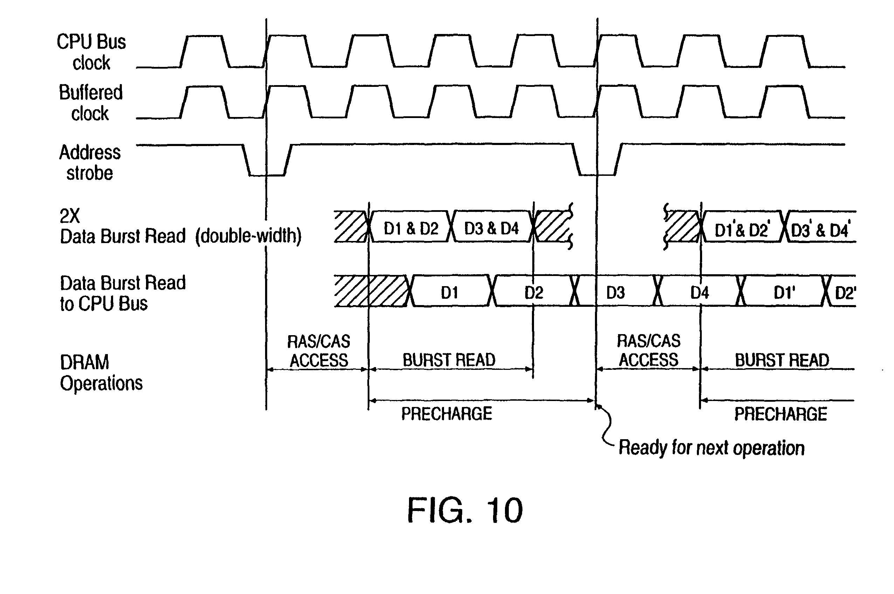

In yet another embodiment, the data path between DRAM array 317 and read data buffer 504 is widened. Fig. 10 is a timing diagram of a 3-1-1-1 DRAM second level cache read operation in accordance with this embodiment of the invention. In this embodiment, the 1X clock signal (generated with or without PLL circuit 501) is used to launch operations within DRAM array 317. A double-wide internal data path, which simultaneously carries two data values, is provided between DRAM array 317 and read data buffer 504, effectively doubling the data transfer rate between DRAM array 317 and read data buffer 504. Although Fig. 10 illustrates a double-wide internal data path, data paths having other widths (e.g., triple-wide, quadruple wide, etc.) are possible and within the scope of the invention. The RAS and CAS operations are launched after the address strobe signal (indicating a new transaction) is asserted. As soon as the accessed data values (e.g., D1-D4) are read from DRAM array 317 into data amplifier circuit 312 (Fig. 3a), column selector 310 disconnects sense amplifier circuit 306 from data amplifier circuit 312 and the precharge operation is begun. This allows DRAM array 317 to operate with a minimum cycle time.

The burst data values D1-D4 are transmitted over the internal data path at the rate of two data values for each cycle of the 1X clock signal. Thus, data values D1 and D2 are transmitted during one clock cycle, and data values D3 and D4 are transmitted during the subsequent clock cycle. The data values stored in read data buffer 504 are transferred to CPU bus 204 at the normal data rate of one data value per cycle of the CPU bus clock signal.

In another embodiment, read data buffer 504 is not used and the data values are transferred at the CPU bus data rate directly from DRAM array 317 to CPU bus 204. All internal RAS/CAS and precharge operations remain as illustrated in Fig. 10. The data values are transmitted on a single width data path directly to CPU bus 204, at a rate of one data value per cycle of the 1X clock signal. The external operation of DRAM second level cache memory 213 in this embodiment can still be compatible with standard PBSRAM. This mode of operation, however, requires the transfer of data values D3 and D4 from data amplifier circuit 312 to CPU bus 204 be performed in parallel with the RAS/CAS access of the next read operation (involving data values D1'-D4'). Care must be taken to minimize the potential internal bus contention problem which may exist between data values D4 and D1'.

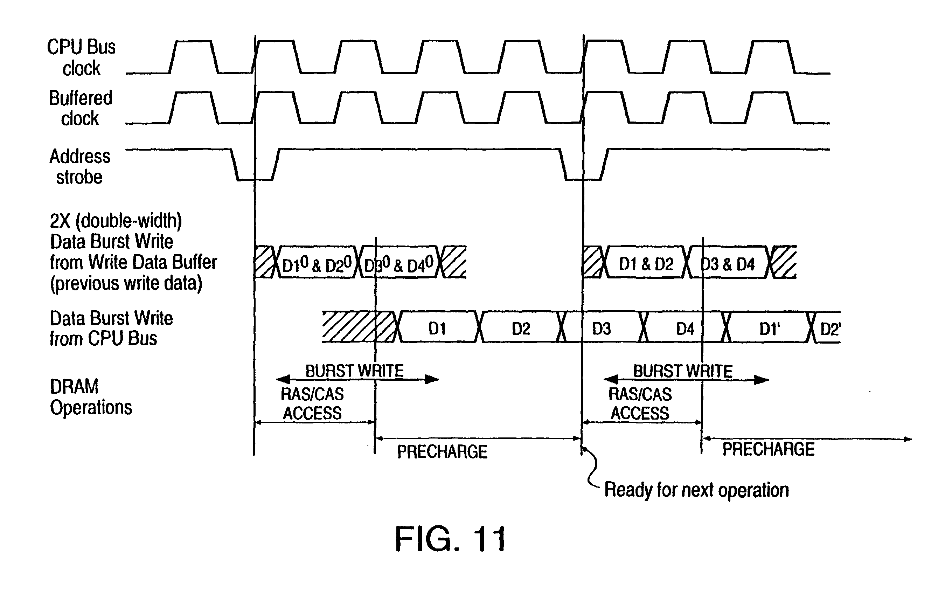

The data path between DRAM array 317 and write data buffer 506 can also be widened. Fig. 11 is a timing diagram of a 3-1-1-1 DRAM second level cache write operation which utilizes a widened wide data path between DRAM array 317 and write data buffer 506. In this embodiment, the 1X clock signal is used to launch internal operations of DRAM 317. The 1X clock signal can be generated by PLL circuit 501 or by simple clock buffering. Although not required by the invention, Fig. 11 illustrates the internal operation of DRAM array 317 with a double-wide internal data path between write data buffer 506 and DRAM array 317. This double-wide data path effectively doubles the internal data transfer rate. The RAS and CAS operations are launched after the address strobe signal (indicating a new transaction) is asserted. A data burst write operation from write data buffer 506 of previously written data values $D1_0$-$D4_0$ is performed to data amplifier circuit 312 in parallel with the RAS/CAS operation. After write data values $D1_0$-$D4_0$ have been transmitted from data amplifier circuit 312 to sense amplifier circuit 306, column selector 310 disconnects sense amplifier circuit 306 from data amplifier circuit 312. After column selector 310 is disconnects these elements, a precharge operation can start immediately, thereby allowing DRAM array 317 to operate with minimum cycle time. Meanwhile, write data buffer 506 accepts new write data values D1-D4 from CPU bus 204 at the normal data rate as determined by the CPU bus clock signal.

In an alternative embodiment, if a widened internal data path between write data buffer 506 and DRAM array 317 is not used, then the precharge operation will start two clocks cycles later than shown in Fig. 11, (i.e., after all of the previous write data values $D1_0$-$D4_0$ have arrived at DRAM array 317). In this embodiment, the minimum cycle time will be two clock cycles longer than in the embodiment described in connection with Fig. 11. The external operation of second level DRAM cache memory 213 in this embodiment will be slower than standard PBSRAM.

### (3) Refresh Management and Arbitration

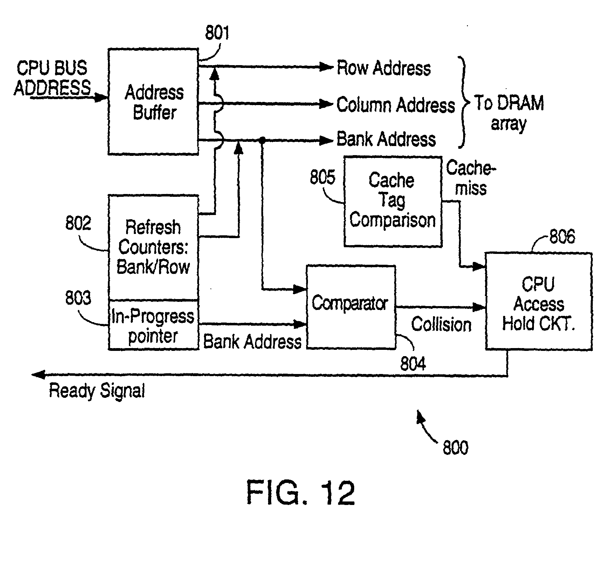

Second level DRAM cache memory 213, with passive charge storage, requires refresh operations to periodically (typically every 4 to 64 ms) replenish the charges stored in each cell capacitor. This is because junction, transistor and dielectric leakage currents may cause the stored charge to leak out. Fig. 12 illustrates one embodiment of a refresh management circuit 800 which can be used in connection with the present invention. Refresh management circuit 800 consists of address buffer 801, refresh counters 802, in-progress pointer 803, comparator 804, cache tag comparator 805 and CPU access delay circuit 806. Refresh management circuit 800 is used in connection with an embodiment which uses multiple DRAM arrays (similar to DRAM array 317) within second level DRAM cache 213.

Refresh counters 802 keep track of the addresses of the DRAM arrays and rows to be refreshed next. Refresh counters 802 periodically initiate a RAS/PRECHARGE operation to the DRAM arrays and rows indicated by the refresh counters 802 by transmitting signals selecting these arrays and rows to the appropriate DRAM array(s). In-progress pointer 803 indicates the address of the DRAM array currently being refreshed. Each refresh operation typically lasts 40 to 60 ns.

Any CPU bus access request initiates a comparison to see if there is cache hit in the second level DRAM cache memory 213. At the same time, if there is a refresh operation in progress, the contents of in-progress pointer 803 (the DRAM array address for a single array refresh, or the high order bits of the DRAM array address for a group array refresh) are compared by comparator 804 to the address of the requested DRAM array. Any collision (match of array addresses) will cause CPU access delay circuit 806 to delay CPU access until the refresh operation is completed, in-progress pointer 803 is cleared, and the appropriate ready signal is sent from CPU access delay circuit 806 to the CPU bus. The delay of CPU access delay circuit 806 is set to a predetermined time based on the known timing of the refresh operation. By partitioning second level DRAM cache memory 213 into multiple banks, the probability of a collision during a refresh operation is proportionately reduced.

### PBSRAM Compatible Embodiment

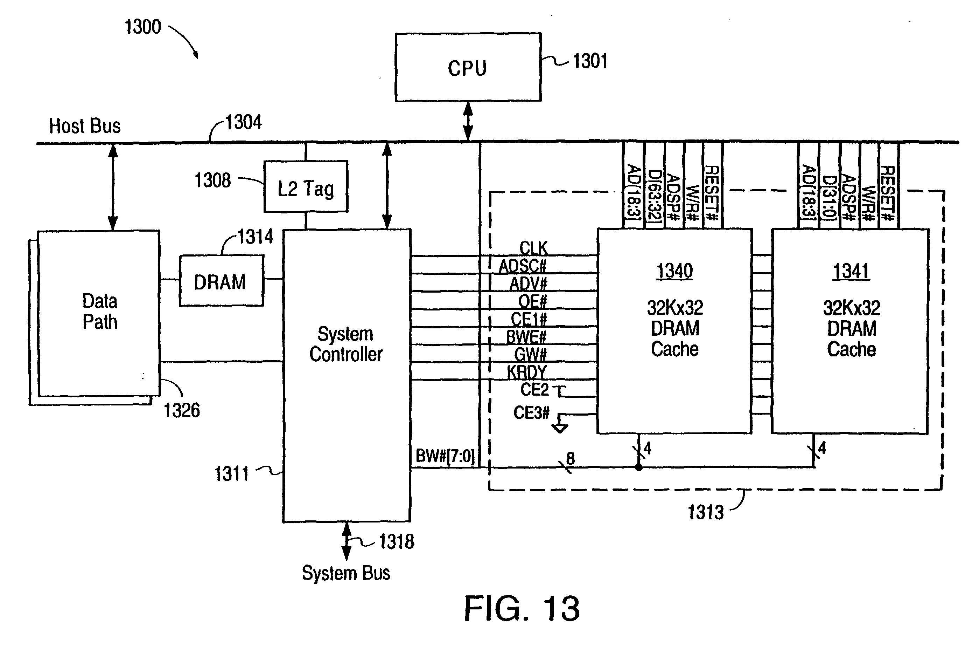

Fig. 13 is schematic diagram illustrating a computer system 1300 which includes CPU 1301, CPU bus 1304, second level cache tag memory 1308, system controller 1311, system bus 1318, second level DRAM cache memory 1313, main DRAM memory 1314 and data path 1326. Computer system 1300 is shown in a PBSRAM compatible environment with key signal pins illustrated. In this embodiment, second level DRAM cache memory 1313 includes two 32K x 32 DRAM memory arrays 1340 and 1341 with pin-out and connections being compatible with standard PBSRAM. Standard PBSRAM utilizes the following signals: address input signals AD[18:3], bi-directional data signals D[63:0], CPU-initiated address strobe input signal ADSP#, clock input signal CLK, controller-initiated address strobe input signal ADSC#, counter advance input signal ADV#, output enable input signal OE#, various chip enable input signals CE1#, CE2 and CE3#, byte write enable input signal BWE#, global write input signal GW#, and individual byte write control input signals BW#[7:0]. These signals are described in more detail in "Pentium™ Processor 3.3V Pipelined BSRAM Specification", Version 1.2, Intel Corporation, October 5, 1994.

The present invention utilizes several signals in addition to those enumerated above. Thus, each of DRAM arrays 1340 and 1341 receives from CPU 1301 a write/read identification (W/R#) signal which defines the nature (i.e., read or write) of a CPU-initiated ADSP# signal. Each of DRAM cache arrays 1340 and 1341 also provides and/or receives a refresh management (Krdy) signal to system controller 1311. The Krdy signal is used to control the management of refresh and internal operations of DRAM arrays 1340 and 1341. Each of DRAM cache arrays 1340 and 1341 also receives a Reset# signal from CPU 1301 for general initialization and synchronization during power up operations.

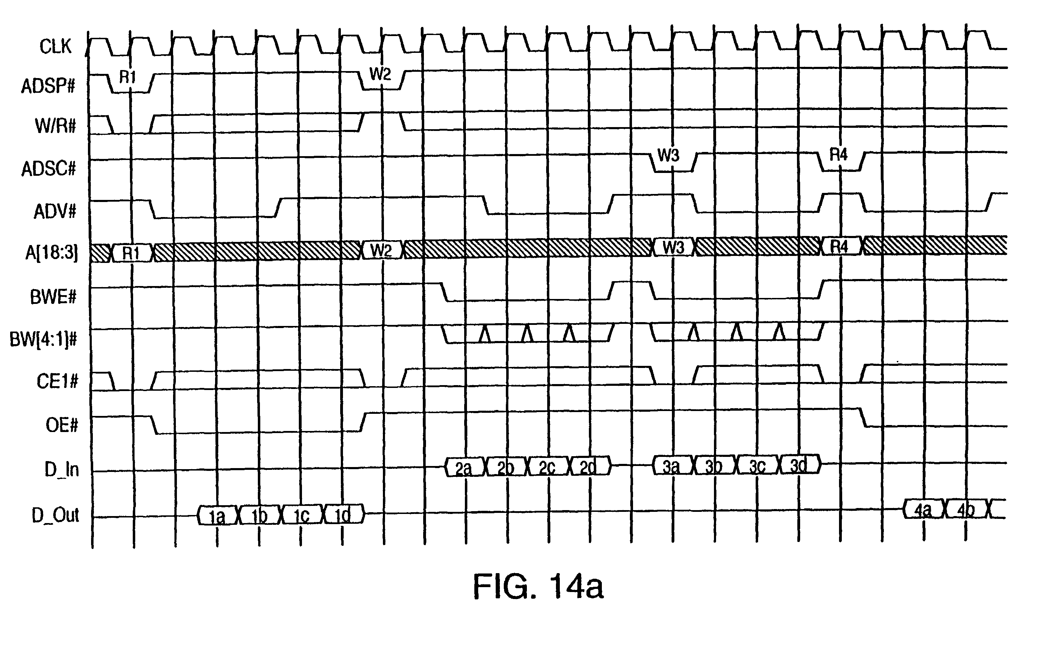

Fig. 14a is a timing diagram of transaction-based DRAM second level cache burst read and write operations using the signals illustrated in Fig. 13. The timing diagram of Fig. 14a is compatible with the requirements of standard PBSRAM. The signal definitions and operations for the ADSP#, ADSC#, ADV#, CLK, GW#, BWE#, BW#'s, CE#, and OE# signals are the same as those of PBSRAM. In a preferred embodiment, the W/R#, BWE# and GW# signals are used in conjunction with the ADSP# and ADSC# signals to uniquely define each transaction. When the ADSP# signal is asserted low at the start of an ADSP# initiated transaction (shown as R1 & W2 in Fig. 14a), the W/R# signal must be valid to indicate whether a read or write operation is to be performed. In Fig. 14a, a low W/R# signal indicates a read transaction and a high W/R# signal indicates a write transaction. In Fig. 14a, the chip enable (CE1#) signal must be initially low at the beginning of the R1 and W2 operations for these operations take place within DRAM arrays 1340 and 1341.

When the ADSC# signal is asserted low at the start of an ADSC# initiated transaction (shown as W3 & R4 in Fig. 14a), the BWE# and GW# signals are used to indicate whether a read or write transaction is to be performed. If either the BWE# signal or the GW# signal (not shown) is low, a write transaction is performed. If neither the BWE# signal nor the GW# signal is low, a read transaction is performed. At the beginning of the W3 and R4 operations, the CE1# signal must be in a low state to cause the W3 and R4 operations to take place within DRAM arrays 1340 and 1341. The burst read and burst write operations illustrated in Fig. 14a are performed in accordance with one of the embodiments previously described in connection with Figs. 10-11.

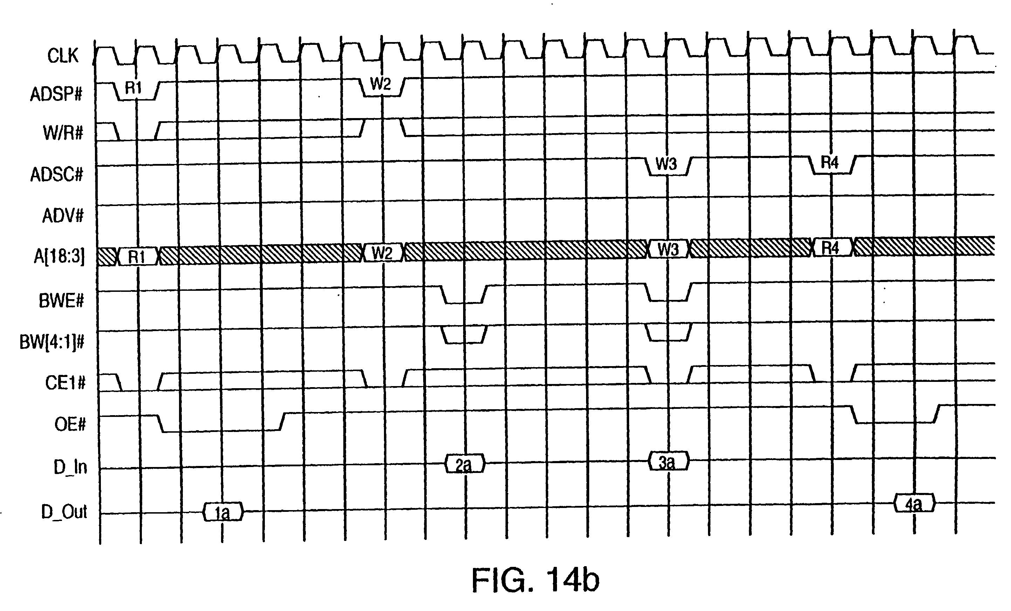

Fig. 14b is a timing diagram of transaction-based DRAM second level cache single read and write operations using the signals illustrated in Fig. 13. The timing of the signals in Fig. 14b is similar to the timing of the signals in Fig. 14a, except for the length of the data phase.

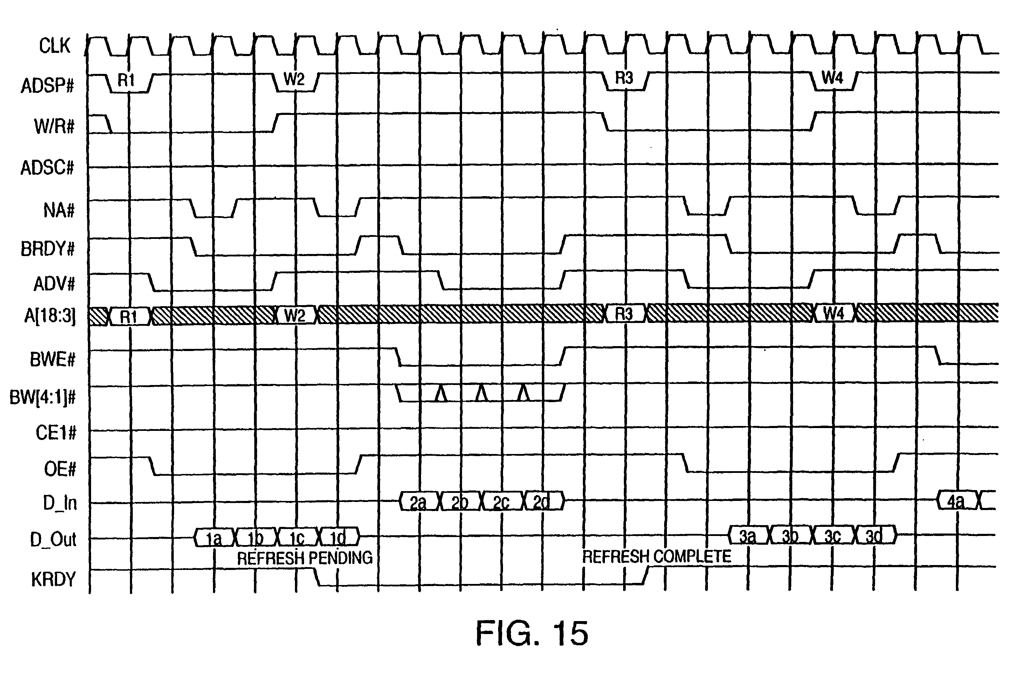

Fig. 15 is a timing diagram which illustrates the handshake protocol of the Krdy signal in computer system 1300 (Fig. 13). The signals illustrated in Fig. 15 are the same signals previously described in connection with Figs. 13 and 14a-14b, with the exception of the NA# and BRDY# signals. The NA# and BRDY# signals are generated by system controller 1311 and sent directly to CPU 1301. The NA# signal indicates that system controller 1311 is ready for next address and the BRDY# signal indicates that data values are ready on CPU bus 1304. The Krdy signal is used to control the refresh management of second level DRAM cache memory 1313.

The falling edge of the Krdy signal indicates there is a pending refresh or other internal operation request, and the rising edge of the Krdy signal indicates the refresh or other internal operation has been completed. The polarity of the Krdy signal is chosen arbitrarily, and opposite polarity can be used to accomplish the same effect. Both DRAM cache memory 1313 and system controller 1311 shall sample the Krdy signal at least at the beginning of each new transaction, whether the transaction is initiated by the ADSP# or ADSC# signal.

In one embodiment, the handshake protocol of the Krdy signal is as follows. If the Krdy signal is high at the start of a new transaction, then this transaction will proceed to completion normally. However, if the Krdy signal is low at the start of a new ADSC# transaction, and the Krdy signal has just entered this low state (within the last clock cycle), the ADSC# transaction will proceed to completion and be followed by a refresh operation. If the Krdy signal has been low for more than one clock cycle, the ADSC# transaction will be delayed until the Krdy signal goes high again.

If the Krdy signal is low at the start of a new ADSP# transaction, then the ADSP# transaction will be delayed until the Krdy signal goes high. Alternatively, the handshake protocol for ADSP# transactions can be defined in a similar manner as the handshake protocol for the ADSC# transactions. Thus, if the Krdy signal is low at the start of a new ADSP# transaction and the Krdy signal has just entered this low state (within the last clock cycle), the ADSP# transaction will proceed to completion and be followed by a refresh operation. If the Krdy signal has been low for more than one clock cycle, the ADSP# transaction will be delayed until the Krdy signal goes high again.

In another handshake protocol, system controller 1311 will also sample the status of the Krdy signal when there is a pending ADSC# transaction. If the Krdy signal is low, then the ADSC# transaction will be delayed until the Krdy signal goes high. Otherwise, the pending ADSC# transaction is initiated.

The Krdy signal can be used for multiple purposes. In another embodiment, the Krdy signal is implemented as an input/output signal. When multiple DRAM arrays (e.g., arrays 1340 and 1341 in Fig. 13) are used together for memory width or depth expansion or both, the Krdy signal can be used for synchronizing the DRAM refresh and/or internal operation among the multiple devices. For example, DRAM array 1340 can be designated as a master device for refresh management. This master DRAM array 1340 uses the Krdy signal to communicate with system controller 1311 and control the refresh management function. Each of the remaining DRAM cache memory devices (e.g., DRAM array 1341) shares the Krdy signal line and are designated as slave devices. Each slave device samples the state of the Krdy signal to control or initiate its own refresh or internal operation in a manner consistent with the master device, thereby maintaining synchronization with the master device.

In a yet another embodiment, the Krdy signal is driven by system controller 1311, and each of DRAM arrays 1340 and 1341, upon detecting a low Krdy signal, will initiate and complete a pre-defined refresh operation.

Turning now to the embodiment illustrated in Fig. 15, after the ADSP# signal is asserted low to begin the W2 write transaction, the Krdy signal is pulled down to indicate that there is a pending refresh event. Since the Krdy signal is high when the ADSP# signal is asserted low, the W2 burst write transaction (involving data values 2a-2d) is executed to completion in a normal manner. When the W2 burst write transaction is completed, a refresh operation is initiated. A read (R3) transaction is subsequently initiated when the ADSP# signal is asserted low. At this time, the Krdy signal is still low because the refresh operation has not been completed. The low Krdy signal causes the R3 read transaction to be delayed until the refresh operation is completed. In this example, the R3 read transaction is delayed by one clock cycle. Even if the ADSP# signal for the R3 read transaction starts earlier than shown in Fig. 15, the R3 read transaction is delayed until the clock cycle shown in Fig. 15 (i.e., the operation is delayed until after Krdy returns high).

The handshake protocol of the Krdy signal can also be implemented in other manners. In one variation, the refresh-pending request is initiated from DRAM cache memory 1313 using the Krdy pin, and system controller 1313 returns an acknowledgment signal on a separate pin to DRAM cache memory 1313 to instruct DRAM cache memory 1313 to start the refresh operation. The Krdy signal is then driven high by DRAM cache memory 1313 upon completion or pending completion of the refresh operation. This arrangement allows more flexibility in the design of system controller 1313 because controller 1313 can control when the refresh operation actually begins.

In another variation, DRAM cache memory 1313 drives the Krdy signal pin to indicate a refresh-pending condition and system controller 1318 drives the Krdy signal pin to indicate a refresh-start condition. In this arrangement, the number of clock cycles required to perform the refresh operation is fixed and both DRAM cache memory 1313 and system controller 1318 have counters which allow these devices to track the refresh operation in a consistent fashion.

Although the invention has been described in connection with several embodiments, it is understood that this invention is not limited to the embodiments disclosed, but is capable of various modifications which would be apparent to one of ordinary skill in the art. Thus, the invention is limited only by the following claims.

## Claims

1. A computer system comprising:

   a central processing unit (CPU) (101,201);
   a first level cache memory (102,202) integrated with the CPU;
   a bus (104,204) coupled to the CPU wherein data is transferred on the bus in response to a first clock signal having a first clock frequency, wherein data is transferred on the bus at a first data rate; and
   a next level cache memory (106, 213) coupled to the bus, a control circuit for controlling data transfer between the bus and the next level cache memory; **characterised in that** the next level cache memory comprises at least one dynamic random access memory (DRAM) array and wherein the control circuit derives a second clock signal from the first clock signal; and
   causes the data of a burst operation to be transferred from the DRAM array (213) in response to a second clock signal at a second data rate which is faster than the first data rate, wherein the control circuit comprises a read buffer (504) having a data input port coupled to the DRAM array and a data output port coupled to the bus, wherein the data input port is clocked by the second clock signal and the data output port is clocked by the first clock signal, and data is transferred from the DRAM array (213) to the read buffer (504) via the data input port faster than data is transferred in a data burst operation (330) from the read buffer to the bus via the data output port.

2. The computer system of claim 1, wherein the control circuit comprises a burst sequencer (300) which accesses the DRAM array in a self-timed manner asynchronous with respect to the first clock signal.

3. The computer system of claim 2, wherein the burst sequencer includes circuitry to access the DRAM array at both edges of the second clock signal.

4. The computer system of claim 1, wherein the control circuit further comprises an address buffer (503) coupled to the bus, wherein the address buffer stores row and column addresses required for a subsequent access to the next level cache memory while a current access to the next level cache memory is in progress.

5. The computer system of claim 1, wherein the control circuit further comprises:

   a phase locked loop (PLL) circuit (501) coupled to the bus, wherein the PLL circuit generates the second clock signal in response to the first clock signal.

6. The computer system of claim 1, wherein the frequency of the second clock signal is higher than the frequency of the first clock signal.

7. The computer system of claim 6, wherein the data input port is clocked twice during each cycle of the second clock signal and the data output port is clocked once during each cycle of the first clock signal.

8. The computer system of claim 1, wherein the control circuit comprises a circuit path for routing the second clock signal, wherein the circuit path is located such that the second clock signal is synchronized with data values written to or read from the DRAM array.

9. The computer system of claim 2, wherein the burst sequencer further comprises:

    a sense amplifier circuit (306) coupled to the DRAM array;
    a data amplifier circuit (312) having a plurality of data amplifiers; and
    a column selector (311) coupled between the sense amplifier circuit and the data amplifier circuit, wherein the column selector can be selected to isolate the sense amplifier circuit from the data amplifier circuit.

10. The computer system of claim 9, wherein the number of data amplifiers in the data amplifier circuit is selected to allow the data amplifier circuit to simultaneously store all of the data values required for a burst access of the DRAM array.

11. The computer system of claim 9, wherein the next level cache memory comprises a plurality of DRAM arrays operating in parallel.

12. The computer system of claim 1, wherein the next level cache memory further comprises a refresh counter (802) which stores the address of a DRAM array which is currently being refreshed.

13. The computer system of claim 12, wherein the next level cache memory further comprises a refresh collision comparator (804) which compares the address of the DRAM array currently being refreshed with an address of a DRAM array requested by the CPU

14. The computer system of claim 13, wherein the next level cache memory further comprises a CPU access delay circuit (806) coupled to the refresh collision comparator, wherein the CPU access delay circuit transmits a ready handshake signal to the bus when the current refresh operation is completed.

15. The computer system of claim 1, the input port being a parallel port having a first width which enables the input port to simultaneously transfer a first number of data values, the output port being a parallel port having a second width which enables the output port to simultaneously transfer a second number of data values, the first number being greater than the second number.

16. The computer system of claim 15, wherein the read data buffer is a multi-depth data buffer capable of storing at least one set of read burst data.

17. The computer system of claim 15, wherein the input port and the output port are driven by clock signals of the same frequency.

18. The computer system of claim 1, wherein the next level cache memory further comprises a plurality of terminals coupling the DRAM array to the bus, wherein a first terminal is connected to receive a first signal from the CPU indicating the start of a new transaction and a second terminal is connected to receive a second signal from the CPU which identifies the new transaction as a read transaction or a write transaction.

19. The computer system of claim 18, wherein the first signal from the CPU is an address strobe input signal compatible with a pipelined burst static random access memory (PBSRAM) protocol.

20. The computer system of claim 1, further comprising a system controller (211), wherein the next level cache memory further comprises a plurality of terminals coupling the DRAM array to the bus, wherein a first terminal is connected to receive a first signal from the system controller indicating the start of a new transaction and second and third terminals are connected to receive second and third signals, respectively, from the system controller, wherein the second and third signals identify the new transaction as a read transaction or a write transaction.

21. The computer system of claim 20, wherein the first signal is an address strobe input signal, the second signal is a byte write enable input signal and the third signal is a global write input signal, wherein the first, second and third signals are compatible with a pipelined burst static random access memory (PBSRAM) protocol.

22. The computer system of claim 1, further comprising a system controller (211) coupled to the next level cache memory, wherein the dynamic random access memory (DRAM) array has a first terminal coupled to the system controller, wherein at least one signal is provided to the first terminal to implement a protocol to manage refresh operations within the DRAM array.

23. In a computer system, a method of using a next level cache memory (106,213) from a bus (104,204) coupled to a central processing unit (CPU) (101,201), the method comprising:

    transferring data on the bus in response to a first clock signal having a first clock frequency, wherein data is transferred on the bus at a first data rate and the method being **characterised by**:

    providing the next level cache memory as a DRAM array (213);

    generating a second clock signal in response to the first clock signal;

    operating the DRAM array in response to the second clock signal, wherein data is transferred to and from the DRAM array at a second data rate, the second data rate being greater than the first data rate;

    reading a plurality of data values from the DRAM array to a read buffer memory (504) using the second clock signal to clock the data values of a burst transaction into the buffer memory; and

    reading the data values from the read buffer memory to the bus in data burst operations (330) using the first clock signal to clock the data values out of the read buffer memory so that the data values are read to the read buffer memory faster than the data values are read from the read buffer memory.

**24.** The method of claim 23, wherein the second clock signal is of a higher frequency than the first clock signal frequency.

**25.** The method of claim 23, further comprising the steps of:

    transmitting data signals on the bus at either the rising edges or the falling edges of the first clock signal; and

    performing reading operations within the DRAM array at both the rising and falling edges of the second clock signal.

**26.** The method of claim 23, wherein the frequency of the second clock signal is the same as the frequency of the first clock signal.

**27.** The method of claim 23, further comprising the steps of:

    transmitting data signals on the bus at either the rising edges or the falling edges of the first clock signal; and

    performing write operations within the DRAM array at both the rising and falling edges of the second clock signal.

**28.** The method of claim 25, further comprising the steps of:

    performing a row access operation in the DRAM array in a self-timed manner asynchronous with respect to the second clock signal;

    performing a column decode operation in the DRAM array in a self-timed manner asynchronous with respect to the second clock signal; and

    performing a predetermined sequence of column select operations in the DRAM array, wherein the column select operations are synchronous with respect to the second clock signal.

**29.** The method of claim 23, wherein the step of precharging is completed before the step of reading the data values from the read buffer memory is completed.

**30.** The method of claim 23 further comprising precharging bit lines of the DRAM array during the time that the data values are read from the read buffer memory to the bus.

**Patentansprüche**

**1.** Computersystem umfassend:

    eine Zentraleinheit (CPU) (101,201);

    einen erste-Stufe-Cache-Speicher (102,202), der in die CPU integriert ist;

    einen Bus (104,204), der an die CPU angeschlossen ist, wobei auf dem Bus Daten in Abhängigkeit von einem ersten Taktsignal, das eine erste Taktfrequenz hat, übertragen werden, wobei auf dem Bus Daten mit einer ersten Datenübertragungsrate übertragen werden; und

    einen nächste-Stufe-Cache-Speicher (106,213), der an den Bus angeschlossen ist, eine Steuerschaltung zum Steuern der Datenübertragung zwischen dem Bus und dem nächste-Stufe-Cache-Speicher;

**dadurch gekennzeichnet, daß**

    der nächste-Stufe-Cache-Speicher mindestens eine Matrix eines dynamischen Speichers mit wahlfreiem Zugriff (dynamic random access memory, DRAM) umfaßt und wobei die Steuerschaltung von dem ersten Taktsignal ein zweites Taktsignal ableitet, und

    veranlaßt, daß die Daten eines Stoßbetriebs in Abhängigkeit von einem zweiten Taktsignal mit einer zweiten Datenübertragungsrate, die größer als die erste Datenübertragungsrate ist, von der DRAM-Matrix (213) übertragen werden, wobei die Steuerschaltung einen Lese-Pufferspeicher (504) umfaßt, der einen Dateneingang hat, der an die DRAM-Matrix angeschlossen ist, und der einen Datenausgang hat, der an den Bus angeschlossen ist, wobei der Dateneingang von dem zweiten Taktsignal getaktet und der Datenausgang von dem ersten Taktsignal getaktet wird, und Daten über den Dateneingang schneller von der DRAM-Matrix (213) an den Lese-Pufferspeicher (504) übertragen werden, als Daten in einem Stoßbetrieb (330) von dem Lese-Pufferspeicher über den Datenausgang an den Bus übertragen werden.

2. Computersystem nach Anspruch 1, wobei die Steuerschaltung eine Signalfolge-Ablaufsteuerung (300) umfaßt, die in selbst ausgelöster Weise asynchron zu dem ersten Taktsignal auf die DRAM-Matrix zugreift.

3. Computersystem nach Anspruch 2, wobei die Signalfolge-Ablaufsteuerung eine Schaltung zum Zugreifen auf die DRAM-Matrix an beiden Flanken des zweiten Taktsignals umfaßt.

4. Computersystem nach Anspruch 1, wobei die Steuerschaltung ferner einen Adress-Pufferspeicher (503) umfaßt, der an den Bus angeschlossen ist, wobei der Adress-Pufferspeicher Reihen- und Spaltenadressen, die für ein nachfolgendes Zugreifen auf den nächste-Stufe-Cache-Speicher erforderlich sind, speichert, während ein aktueller Zugriff auf den nächste-Stufe-Cache-Speicher in Bearbeitung ist.

5. Computersystem nach Anspruch 1, wobei die Steuerschaltung ferner umfaßt:

   eine phasengeregelte (phase locked loop, PLL) Schaltung (501), die an den Bus angeschlossen ist, wobei die PLL-Schaltung das zweite Taktsignal in Abhängigkeit von dem ersten Taktsignal erzeugt.

6. Computersystem nach Anspruch 1, wobei die Frequenz des zweiten Taktsignals höher als die Frequenz des ersten Taktsignals ist.

7. Computersystem nach Anspruch 6, wobei der Dateneingang während jedes Zyklus des zweiten Taktsignals zweimal getaktet wird und der Datenausgang während jedes Zyklus des ersten Taktsignals einmal getaktet wird.

8. Computersystem nach Anspruch 1, wobei die Steuerschaltung einen Schaltungspfad zur Wegsteuerung des zweiten Taktsignals umfaßt, wobei der Schaltungspfad derart angeordnet ist, daß das zweite Taktsignal mit Datenwerten synchronisiert wird, die in die DRAM-Matrix geschrieben oder aus ihr gelesen werden.

9. Computersystem nach Anspruch 2, wobei die Signalfolge-Ablaufsteuerung ferner umfaßt:

   eine Abtastverstärker-Schaltung (306), die an die DRAM-Matrix angeschlossen ist;

   eine Datenverstärker-Schaltung (312), die eine Mehrzahl von Datenverstärkern hat; und

   einen Spaltenselektor (311), der zwischen die Abtastverstärker-Schaltung und die Datenverstärker-Schaltung geschaltet ist, wobei der Spaltenselektor so eingestellt sein kann, daß er die Abtastverstärker-Schaltung von der Datenverstärker-Schaltung trennt.

10. Computersystem nach Anspruch 9, wobei die Anzahl an Datenverstärkern in der Datenverstärker-Schaltung so gewählt ist, daß alle Datenwerte, die für einen Stoßzugriff auf die DRAM-Matrix erforderlich sind, von der Datenverstärker-Schaltung simultan gespeichert werden können.

11. Computersystem nach Anspruch 9, wobei der nächste-Stufe-Cache-Speicher eine Mehrzahl von DRAM-Matrizen umfaßt, die parallel arbeiten.

12. Computersystem nach Anspruch 1, wobei der nächste-Stufe-Cache-Speicher ferner einen Auffrischzähler (802) umfaßt, der die Adresse einer DRAM-Matrix speichert, die gerade aufgefrischt wird.

13. Computersystem nach Anspruch 12, wobei der nächste-Stufe-Cache-Speicher ferner einen Auffrisch-Kollisionskomparator (804) umfaßt, der die Adresse der DRAM-Matrix, die gerade aufgefrischt wird, mit einer Adresse einer DRAM-Matrix, die von der CPU angefordert wird, vergleicht.

14. Computersystem nach Anspruch 13, wobei der nächste-Stufe-Cache-Speicher ferner eine CPU-Zugriffsverzögerungsschaltung (806) umfaßt, die an den Auffrisch-Kollisionskomparator angeschlossen ist, wobei die CPU-Zugriffsverzögerungschaltung ein Bereitschafts-Handshake-Signal an den Bus überträgt, wenn der aktuelle Auffrischvorgang beendet ist.

15. Computersystem nach Anspruch 1, wobei der Eingang ein Parallelport ist, der eine erste Bandbreite hat, die es dem Eingang ermöglicht, eine erste Anzahl von Datenwerten simultan zu übertragen, und der Ausgang ein Parallelport ist, der eine zweite Bandbreite hat, die es dem Ausgang ermöglicht, eine zweite Anzahl von Datenwerten simultan zu übertragen, wobei die erste Anzahl größer als die zweite Anzahl ist.

**16.** Computersystem nach Anspruch 15, wobei der Lese-Datenpufferspeicher ein Daten-Pufferspeicher mit mehreren Tiefen ist, der in der Lage ist, zumindest einen Satz gelesener Stoßdaten zu speichern.

**17.** Computersystem nach Anspruch 15, wobei der Eingang und der Ausgang mit Taktsignalen der gleichen Frequenz gesteuert werden.

**18.** Computersystem nach Anspruch 1, wobei der nächste-Stufe-Cache-Speicher ferner eine Mehrzahl von Anschlüssen umfaßt, die die DRAM-Matrix an den Bus anschließen, wobei ein erster Anschluß für das Empfangen eines ersten Signals von der CPU, das den Start einer neuen Übertragung anzeigt, angeschlossen ist, und ein zweiter Anschluß zum Empfangen eines zweiten Signals von der CPU, das den neuen Übertragunsvorgang als Lesevorgang oder Schreibvorgang. identifiziert, angeschlossen ist.

**19.** Computersystem nach Anspruch 18, wobei das erste Signal von der CPU ein Adressenabtast-Eingangssignal ist, das kompatibel mit einem über eine Leitung geleiteten Protokoll eines statischen Stoßspeichers mit wahlfreiem Zugriff (pipelined burst static random access memory; PBSRAM) ist.

**20.** Computersystem nach Anspruch 1, ferner umfassend einen Systemcontroller (211), wobei der nächste-Stufe-Cache-Speicher ferner eine Mehrzahl von Anschlüssen umfaßt, die die DRAM-Matrix mit dem Bus verbinden, wobei ein erster Anschluß zum Empfangen eines ersten Signals von dem Systemcontroller, das den Start einer neuen Übertragung anzeigt, angeschlossen ist, und ein zweiter und dritter Anschluß angeschlossen sind, um jeweils zweite und dritte Signale von dem Systemcontroller zu empfangen, wobei die zweiten und dritten Signale die neue Übertragung als eine Leseübertragung oder eine Schreibübertragung identifizieren.

**21.** Computersystem nach Anspruch 20, wobei das erste Signal ein Adressenabtast-Eingangssignal ist, das zweite Signal ein Byte-Schreiben ermöglichendes Eingangssignal und das dritte Signal ein globales Schreiben-Eingangssignal ist, wobei die ersten, zweiten und dritten Signale kompatibel mit einem über eine Leitung geleiteten Protokoll eines statischen Stoßspeichers mit wahlfreiem Zugriff (pipelined burst static random access memory; PBSRAM) sind.

**22.** Computersystem nach Anspruch 1, ferner umfassend einen Systemcontroller (211), der an den nächste-Stufe-Cache-Speicher angeschlossen ist, wobei die Matrix eines dynamischen Speichers mit wahlfreiem Zugriff (DRAM) einen ersten Anschluß hat, der an den Systemcontroller angeschlossen ist, und wobei mindestens ein Signal an den ersten Anschluß angelegt ist, um ein Protokoll für das Steuern der Auffrischvorgänge in der DRAM-Matrix zu implementieren.

**23.** Verfahren zum Verwenden eines nächste-Stufe-Cache-Speichers (106,213) in einem Computersystem von einem Bus (104,204), der an eine Zentraleinheit (CPU) (101,201) angeschlossen ist, wobei das Verfahren umfaßt:

Übertragen von Daten auf dem Bus in Abhängigkeit von einem ersten Taktsignal, das eine erste Taktfrequenz hat, wobei auf dem Bus Daten mit einer ersten Datenübertragungsrate übertragen werden, und das Verfahren **gekennzeichnet ist durch**:

Bereitstellen eines nächste-Stufe-Cache-Speichers als eine DRAM-Matrix (213);

Erzeugen eines zweiten Taktsignals in Abhängigkeit von dem ersten Taktsignal;

Betreiben der DRAM-Matrix in Abhängigkeit von dem zweiten Taktsignal, wobei Daten mit einer zweiten Datenübertragungsrate an die DRAM-Matrix übertragen und von der DRAM-Matrix gelesen werden, wobei die zweite Datenübertragungsrate größer als die erste Datenübertragungsrate ist;

Lesen einer Mehrzahl von Datenwerten aus der DRAM-Matrix in einen Lese-Pufferspeicher (504), wobei das zweite Taktsignal verwendet wird, um die Datenwerte einer Stoßübertragung in dem Pufferspeicher zu takten; und

Lesen der Datenwerte aus dem Lese-Pufferspeicher in den Bus in Datenstoßvorgängen (330), die das erste Taktsignal verwenden, um die Datenwerte aus dem Lese-Pufferspeicher heraus zu takten, so daß die Datenwerte schneller in den Lese-Pufferspeicher gelesen werden als die Datenwerte aus dem Lese-Pufferspeicher gelesen werden.

**24.** Verfahren nach Anspruch 23, wobei das zweite Taktsignal eine höhere Frequenz als das erste Taktsignal hat.

**25.** Verfahren nach Anspruch 23, ferner umfassend folgende Schritte:

Übertragen von Datensignalen auf dem Bus bei entweder den ansteigenden Flanken oder den abfallenden Flanken des ersten Taktsignals; und

Durchführen von Leseoperationen in der DRAM-Matrix sowohl an den ansteigenden als auch den abfallenden Flanken des zweiten Taktsignals.

**26.** Verfahren nach Anspruch 23, wobei die Frequenz des zweiten Taktsignals die gleiche ist wie die Frequenz des ersten Taktsignals.

**27.** Verfahren nach Anspruch 23, ferner umfassend folgende Schritte:

Übertragen von Datensignalen auf dem Bus bei entweder den ansteigenden Flanken oder den abfallenden Flanken des ersten Taktsignals; und

Durchführen von Schreiboperationen in der DRAM-Matrix sowohl an den ansteigenden als auch den abfallenden Flanken des zweiten Taktsignals.

**28.** Verfahren nach Anspruch 25, ferner umfassend folgende Schritte:

Durchführen einer Reihenzugriffsoperation in der DRAM-Matrix in einer selbst ausgelösten Weise asynchron zu dem zweiten Taktsignal;

Durchführen einer Spaltendekodieroperation in der DRAM-Matrix in einer selbst ausgelösten Weise asynchron zu dem zweiten Taktsignal; und

Durchführen einer vorher bestimmten Abfolge von Spaltenauswahloperationen in der DRAM-Matrix, wobei die Spaltenauswahloperationen synchron zu dem zweiten Taktsignal sind.

**29.** Verfahren nach Anspruch 23, wobei der Vorausaufladeschritt beendet wird, bevor der Schritt zum Lesen der Datenwerte aus dem Lese-Pufferspeicher beendet ist.

**30.** Verfahren nach Anspruch 23, ferner umfassend das Vorausaufladen von Bit-Leitungen der DRAM-Matrix während der Zeit, in der die Datenwerte aus dem Lese-Pufferspeicher in den Bus gelesen werden.

**Revendications**

**1.** Système d'ordinateur comportant :

une unité de traitement central (CPU) (101, 201) ;
une anté-mémoire (102, 202) de premier niveau intégré à la CPU ;
un bus (104, 204) couplé à la CPU, dans lequel des données sont transférées sur le bus en réponse à un premier signal d'horloge ayant une première fréquence d'horloge, dans lequel des données sont transférées sur le bus à une première vitesse de données ; et
une anté-mémoire (106, 213) de niveau suivant couplée au bus, un circuit de commande destiné à commander le transfert de données entre le bus et l'anté-mémoire de niveau suivant ; **caractérisé en ce que**
l'anté-mémoire de niveau suivant comporte au moins un réseau de mémoire vive dynamique (DRAM) et dans lequel le circuit de commande déduit un second signal d'horloge du premier signal d'horloge ; et
fait que les données d'une opération de salve sont transférées du réseau (213) DRAM en réponse à un second signal d'horloge à une seconde vitesse de données qui est plus rapide que la première vitesse de données, dans lequel le circuit de commande comporte un tampon (504) de lecture ayant un port d'entrée de données couplé au réseau DRAM et un port de sortie de données couplé au bus, dans lequel le port d'entrée de données est synchronisé par le second signal d'horloge et le port de sortie de donnée est synchronisé par le premier signal d'horloge, et des données sont transférées du réseau (213) DRAM au tampon (504) de lecture par l'intermédiaire du port d'entrée plus rapidement que des données transférées dans une opération (330) de salve de données du tampon de lecture vers le bus par l'intermédiaire du port de sortie de données.

**2.** Système d'ordinateur suivant la revendication 1, dans lequel le circuit de commande comporte un dispositif (300) de séquencage de salve qui accède au réseau DRAM d'une manière auto-synchronisée asynchrone par rapport au premier signal d'horloge.

**3.** Système d'ordinateur suivant la revendication 2, dans lequel le dispositif de séquencage de salve comporte un circuit pour accéder au réseau DRAM aux deux fronts du second signal d'horloge.

4. Système d'ordinateur suivant la revendication 1, dans lequel le circuit de commande comporte en outre un tampon (503) d'adressage couplé au bus, le tampon d'adressage mémorisant des adresses de rangées et de colonnes nécessitées pour un accès par la suite à l'anté-mémoire de niveau suivant tandis qu'un accès en cours à l'anté-mémoire de niveau suivant a lieu.

5. Système d'ordinateur suivant la revendication 1, dans lequel le circuit de commande comporte en outre :

   un circuit (501) à boucle à verrouillage de phase (PLL) couplé au bus, circuit PLL produisant le second signal d'horloge en réponse au premier signal d'horloge.

6. Système d'ordinateur suivant la revendication 1, dans lequel la fréquence du second signal d'horloge est supérieure à la fréquence du premier signal d'horloge.

7. Système d'ordinateur suivant la revendication 6, dans lequel le port d'entrée de données est synchronisé deux fois pendant chaque cycle du second signal d'horloge et le port de sortie de données est synchronisé une fois pendant chaque cycle du premier signal d'horloge.

8. Système d'ordinateur suivant la revendication 1, dans lequel le circuit de commande comprend un trajet de circuit pour acheminer le second signal d'horloge, le trajet de circuit étant disposé de sorte que le second signal d'horloge est synchronisé avec des valeurs de données écrites vers le réseau DRAM et lues du réseau DRAM.

9. Système d'ordinateur suivant la revendication 2, dans lequel le dispositif de séquencage de salve comporte en outre :

   un circuit (306) amplificateur de détection couplé au réseau DRAM ;
   un circuit (312) d'amplification de données ayant une pluralité d'amplificateurs de données ; et
   un sélecteur (311) de colonne couplé entre le circuit d'amplification de détection et le circuit d'amplification de données, le sélecteur de colonne pouvant être sélectionné pour isoler le circuit amplificateur de détection du circuit amplificateur de données.

10. Système d'ordinateur suivant la revendication 9, dans lequel le nombre d'amplificateur de données dans le circuit d'amplificateur de données est sélectionné pour permettre au circuit amplificateur de données de mémoriser simultanément toutes les valeurs de données nécessitées pour un accès de salve du réseau DRAM.

11. Système d'ordinateur suivant la revendication 9, dans lequel l'anté-mémoire de niveau suivant comporte une pluralité de réseaux DRAM fonctionnant en parallèle.

12. Système d'ordinateur suivant la revendication 1, dans lequel l'anté-mémoire de niveau suivant comporte en outre un dispositif (802) de comptage régénérable qui mémorise l'adresse d'un réseau DRAM qui est en train d'être régénéré.

13. Système d'ordinateur suivant la revendication 12, dans lequel l'anté-mémoire de niveau suivant comporte en outre un comparateur (804) de collision régénérable qui compare l'adresse du réseau DRAM en cours d'être régénéré à une adresse d'un réseau DRAM demandée par la CPU.

14. Système d'ordinateur suivant la revendication 13, dans lequel l'anté-mémoire de niveau suivant comporte en outre un circuit (106) de retard d'accès de CPU couplé au comparateur de collision de régénération, dans lequel le circuit de retard d'accès de CPU transmet un signal de protocole d'établissement de liaison prêt au bus lorsque l'opération de régénération en cours est terminée.

15. Système d'ordinateur suivant la revendication 1, le port d'entrée étant un port parallèle ayant une première largeur qui permet au port d'entrée de transférer simultanément un premier nombre de valeurs de données, le port de sortie étant un port parallèle ayant une seconde largeur qui permet au port de sortie de transférer simultanément un second nombre de valeurs de données, le premier nombre étant supérieur au second nombre.

16. Système d'ordinateur suivant la revendication 15, dans lequel le tampon de données de lecture est un tampon de données à profondeur multiple capable de mémoriser au moins un ensemble de données de salve de lecture.

17. Système d'ordinateur suivant la revendication 15, dans lequel le port d'entrée et le port de sortie sont entraînés par des signaux d'horloge de même fréquence.

18. Système d'ordinateur suivant la revendication 1, dans lequel l'anté-mémoire de niveau suivant comporte en outre une pluralité de terminaux couplant le réseau DRAM au bus, dans lequel un premier terminal est connecté pour recevoir un premier signal de la CPU indiquant le début d'une nouvelle transaction et un second terminal est connecté pour recevoir un second signal de la CPU qui identifie la nouvelle transaction en tant qu'une transaction de lecture ou une transaction d'écriture.

19. Système d'ordinateur suivant la revendication 18, dans lequel le premier signal provenant de la CPU est un signal d'entrée d'analyse d'adresse compatible avec un protocole de mémoire vive statique de salve à pipeline (PBSRAM).

20. Système d'ordinateur suivant la revendication 1, comportant en outre un dispositif (211) de commande de système, l'anté-mémoire de niveau suivant comportant en outre une pluralité de terminaux couplant le réseau DRAM au bus, un premier terminal étant connecté pour recevoir un premier signal du dispositif de commande de système indiquant le début d'une nouvelle transaction et des deuxième et troisième terminaux étant connectés pour recevoir des deuxième et troisième signaux respectivement du dispositif de commande de système, les deuxième et troisième signaux identifiant la nouvelle transaction en tant qu'une transaction de lecture ou une transaction d'écriture.

21. Système d'ordinateur suivant la revendication 20, dans lequel le premier signal est un signal d'entrée d'analyse d'adresse, le second signal est un signal d'entrée d'activation l'écriture d'octets et le troisième signal est un signal d'entrée d'écriture globale, les premier, deuxième et troisième signaux étant compatibles avec une mémoire vive statique à salve à pipeline (PBSRAM).

22. Système d'ordinateur suivant la revendication 1, comportant en outre un dispositif (211) de commande de système couplé à l'anté-mémoire de niveau suivant, le réseau DRAM ayant un premier terminal couplé au dispositif de commande de système, au moins un signal étant fourni au premier terminal pour mettre en oeuvre un protocole pour gérer des opérations de régénération à l'intérieur du réseau DRAM.

23. Dans un système d'ordinateur, procédé d'utilisation d'une anté-mémoire (106, 213) de niveau suivant provenant d'un bus (104, 204) couplé à une unité centrale (CPU) (101, 201), le procédé comportant les étapes qui consistent à :

transférer des données sur le bus en réponse à un premier signal d'horloge ayant une première fréquence d'horloge, des données étant transférées sur le bus à une première vitesse de données et le procédé étant **caractérisé par** les étapes qui consistent à :

prendre l'anté de mémoire de niveau suivant en tant qu'un réseau (213) DRAM ; produire un second signal d'horloge en réponse au premier signal d'horloge ; faire fonctionner le réseau DRAM en réponse au second signal d'horloge, des données étant transférées vers le réseau DRAM et en provenance du réseau DRAM à une seconde vitesse de données, la seconde vitesse de données étant supérieure à la première vitesse de données ; lire une pluralité de valeurs de données du réseau DRAM vers une mémoire (504) de tampon de lecture en utilisant le second signal d'horloge pour synchroniser les valeurs de données d'une transaction de salve dans la mémoire tampon ; et lire les valeurs de données de la mémoire tampon de lecture vers le bus dans des opérations (330) de salve de données en utilisant le premier signal d'horloge pour synchroniser les valeurs de données sortant de la mémoire tampon de lecture de sorte que les valeurs de données sont lues à la mémoire tampon de lecture plus rapidement que les valeurs de données ne sont lues de la mémoire tampon de lecture.

24. Procédé suivant la revendication 23, dans lequel le second signal d'horloge est d'une fréquence supérieure à la première fréquence de signal d'horloge.

25. Procédé suivant la revendication 23 comportant en outre les étapes qui consistent à :

transmettre des signaux de données sur le bus soit aux fronts montants, soit aux fronts descendants du premier signal d'horloge ; et effectuer des opérations de lecture dans le réseau DRAM à la fois aux fronts montants et descendants du second signal d'horloge.

26. Procédé suivant la revendication 23, dans lequel la fréquence du second signal d'horloge est la même que la fréquence du premier signal d'horloge.

27. Procédé suivant la revendication 23, comportant en outre les étapes qui consistent à :

transmettre des signaux de données sur le bus soit aux fronts montants, soit aux fronts descendants du premier signal d'horloge ; et effectuer des opérations d'écriture dans le réseau DRAM à la fois aux fronts montants et descendants du second signal d'horloge.

**28.** Procédé suivant la revendication 25, comportant les étapes qui consistent à :

effectuer une opération d'accès de rangées dans le réseau DRAM d'une manière auto-synchronisée asynchrone par rapport au second signal d'horloge ;

effectuer une opération de décodage de colonnes dans le réseau DRAM d'une manière auto-synchronisée de manière asynchrone par rapport au second signal d'horloge ; et

effectuer une séquence déterminée à l'avance d'opérations de sélection de colonne dans le réseau DRAM, les opérations de sélection de colonne étant synchrones par rapport au second signal d'horloge.

**29.** Procédé suivant la revendication 23, dans lequel l'étape de préchargement est terminée avant que ne soit terminée l'étape de lecture des valeurs de données de la mémoire tampon de lecture.

**30.** Procédé suivant la revendication 23, comportant en outre l'étape qui consiste à précharger des lignes de bit du réseau DRAM pendant le temps que les valeurs de données sont lues de la mémoire tampon de lecture vers le bus.

FIG. 1
(PRIOR ART)

FIG. 2

FIG. 3a

EP 0 793 827 B1

FIG. 3b

FIG. 4

EP 0 793 827 B1

FIG. 5

FIG. 6

**FIG. 7**

EP 0 793 827 B1

FIG. 8

EP 0 793 827 B1

EP 0 793 827 B1

CPU BUS
CLOCK ① ② ③ ④ ⑤ ①' ②'

2X CLOCK

Address
Strobe

Data Burst Write
from CPU BUS D1' D2' D3' D4'

2X Data Burst Write
from Write FIFO
(Previous Write data) D1 D2 D3 D4

DRAM Operations

RAS/CAS access

Burst Write to
data-amp

Data Write to Sense amp

PRECHARGE

READY FOR NEXT
OPERATION

READY FOR NEXT PIPELINED
OPERATION

FIG. 9

FIG. 10

CPU Bus clock

Buffered clock

Address strobe

2X (double-width) Data Burst Write from Write Data Buffer (previous write data)

$D1^0$ & $D2^0$    $D3^0$ & $D4^0$        D1 & D2    D3 & D4

Data Burst Write from CPU Bus

D1    D2    D3    D4    D1'    D2'

DRAM Operations

BURST WRITE
RAS/CAS ACCESS

BURST WRITE
RAS/CAS ACCESS

PRECHARGE

PRECHARGE

Ready for next operation

FIG. 11

801

CPU BUS
ADDRESS →  | Address Buffer | → Row Address ⎫
           |                | → Column Address ⎬ To DRAM array
           |                | → Bank Address ⎭

805 | Cache Tag Comparison | → Cache-miss

802 → | Refresh Counters: Bank/Row |

803 → | In-Progress pointer | Bank Address → | Comparator | → Collision → | CPU Access Hold CKT. | 806

804

← Ready Signal

800

## FIG. 12

FIG. 13

EP 0 793 827 B1

FIG. 14a

EP 0 793 827 B1

FIG. 14b

FIG. 15

EP 0 793 827 B1